# EUROPEAN PATENT APPLICATION

(11) **EP 4 656 949 A1**
(43) Date of publication of application: **03.12.2025**
(21) Application number: 25178742.0
(22) Date of filing: 26.05.2025
(51) Int. Cl.: F24C 7/08, F24C 15/02, H05B 6/64, G06F 3/0481

(54) **COOKING APPLIANCE WITH DIGITAL CONTROLLER DOOR AND METHOD FOR PROVIDING USER INTERFACE BASED ON OPERATION OF COOKING APPLIANCE**

(30) Priority: 30.05.2024 KR 20240070766; 16.12.2024 KR 20240187294
(71) Applicant: LG Electronics Inc., Yeongdeungpo-gu Seoul 07336 (KR)
(72) Inventor: KIM, Dong Hun, 07796 Seoul (KR); KIM, Young Jin, 07796 Seoul (KR); KIM, Jeongkil, 07796 Seoul (KR); JANG, Junhwan, 07796 Seoul (KR); KWON, Geon, 07796 Seoul (KR); LEE, Hansu, 07796 Seoul (KR)
(74) Representative: Vossius & Partner Patentanwälte Rechtsanwälte mbB

(57) **Abstract**

Disclosed are a cooking appliance including a digital controller door and a method for providing an user interface based on an operation of the cooking appliance, and the cooking appliance includes: a functional unit configured to provide a cooking function; and the digital controller door configured to instruct an operation of the functional unit and to provide a human interface, wherein the digital controller door includes: a display configured to display an image or video and configured to receive a touch input; and an operating system (OS) controller configured to control each of components of the digital controller door, wherein the OS controller is configured to display at least one of a main control interface, a cooking interface, an informational interface, and a temporal interface on the display, based on a function provided by the functional unit or a function provided by the digital controller door or a touch input onto the display.

## Description

The present invention relates to a cooking appliance including a digital controller door and a method for providing a user interface based on an operation of the cooking appliance.

### Description of Related Art

A cooking appliance is a home appliance that cooks food using microwaves belonging to electromagnetic waves and/or heater heat. The cooking appliance may be generally provided with a cavity as a space in which food is placed and cooked, and a door for opening and closing the cavity

When the cooking appliance is installed indoors, it is necessary to consider efficient use of the cooking appliance, saving of an installation space thereof, etc.

For this reason, the cooking appliance may be disposed at a position adjacent to a heating cooking device, for example, a heating oven, a gas stove, etc. Specifically, the cooking appliance may be disposed on top of the heating cooking device.

When the cooking appliance is disposed on top of the heating cooking device, the user may conveniently cook food by reducing the movement of the user in an environment in which the cooking appliance and the heating cooking device are adjacent to each other. In addition, heat, oil vapor, etc. as generated from the heating cooking device may be discharged to the outside using the cooking appliance as a hood.

In a state in which the cooking appliance is disposed on top of the heating cooking device, heat, oil vapor, or the like generated from the heating cooking device disposed under the cooking appliance may adversely affect the operation of the cooking appliance.

For example, a display may be mounted on a front surface of a door provided in the cooking appliance and may be configured to provide various information to the user. The user may know a cooking state of the cooked food through the display.

In addition, when the display is connected to another home appliance so as to serve as a hub of the home appliances, information other than cooking food may be obtained through the display. In addition, the user may input a command necessary for cooking and various other commands to the display in a touch manner.

Therefore, it is necessary for the display to provide an interface capable of controlling the cooking appliance while displaying various information.

Thus, the present invention has been devised to solve the above problem. A purpose of the present invention is to provide an interface in which various software or hardware of a door coupled to the cooking appliance cooperates smoothly with a control component for controlling the cooking appliance, and the interface for controlling the cooking appliance may be provided.

Further, a purpose of the present invention is to provide a technology for providing a user interface for controlling the whole cooking appliance and a state of cooking, respectively, such that a user may conveniently control the cooking appliance.

Further, a purpose of the present invention is to provide a technology for providing a human interface (i.e., a user interface) based on a use pattern of the cooking appliance.

Purposes according to the present invention are not limited to the above-mentioned purpose. Other purposes and advantages according to the present invention that are not mentioned may be understood based on following descriptions, and may be more clearly understood based on embodiments according to the present invention. Further, it will be easily understood that the purposes and advantages according to the present invention may be realized using means shown in the claims or combinations thereof.

The present invention is specified by the independent claims. Preferred embodiments are defined by the dependent claims. A cooking appliance including a digital controller door according to the present invention includes: a functional unit configured to provide a cooking function; and the digital controller door configured to instruct an operation of the functional unit and to provide a human interface, wherein the digital controller door includes: a display configured to display an image or video and configured to receive a touch input, and an operating system (OS) controller configured to control each of components of the digital controller door, wherein the OS controller is configured to display at least one of a main control interface, a cooking interface, an informational interface, and a temporal interface on the display, based on a function provided by the functional unit or a function provided by the digital controller door or a touch input onto the display. The human interface may be a man-machine-interface, i.e., a user interface.

The OS controller may be configured to always display the main control interface on the display.

The main control interface may include a home button, a back button, and/or a main stop button to which the touch input from a user is applied.

The OS controller may be configured to display the cooking interface on the display in response to an object comprising a cooking target material being put into the cooking appliance.

The OS controller may be configured to display the cooking interface on the display in response to the digital controller door being opened and closed.

The OS controller may be configured to display the cooking interface on the display in response to the cooking of the cooking appliance being paused.

The OS controller may be configured to display the cooking interface on the display in response to being completed.

The OS controller may be configured to display the cooking interface on the display in response to the cooking being in progress.

The cooking interface may include a cooking control input interface.

The cooking interface may include a cooking process display interface.

The cooking interface may include a mini-controller interface.

The informational interface may display information unrelated to cooking of the cooking appliance.

In response to the cooking appliance performing a cooking function, the OS controller may be configured to display the mini-controller interface in a first area of the display where the informational interface has been displayed.

In response to an occurrence of the movement of the mini-controller interface to a specific position, the OS controller may be configured to store therein a mapping between the specific position of the mini-controller interface.

In response to an occurrence of the movement of the mini-controller interface to a specific position, the OS controller may be configured to store therein identification information of an image or a video or an application displayed on the information interface.

The OS controller may be configured to display the mini-controller interface at the specific position on the information interface where the image or video or application is displayed, based on the stored mapping.

The mini-controller interface may include a display area where an image or a video obtained by capturing a cooking state of the cooking target material is displayed; a progress bar for indicating a progress state of a cooking process; a stop button for terminating the cooking; and a pause button for temporarily stopping the cooking.

A method for providing an interface on a cooking appliance according to the present invention is provided. The cooling appliance includes: a functional unit configured to provide a cooking function; and the digital controller door configured to instruct an operation of the functional unit and to provide a human interface. The method comprises: checking, the OS controller, an interface corresponding to a function provided by the functional unit, or a function provided by the digital controller door or a touch input on the display; and displaying, by the OS controller, at least one interface of a main control interface, a cooking interface, an informational interface, and a temporal interface on the display, based on the checking result.

The main control interface may always be displayed on the display.

The main control interface may include a home button, a back button, and a main stop button to which the touch input from a user is applied.

The displaying, by the OS controller of the at least one interface may include in response to (a) an object comprising a cooking target material being put into the cooking appliance, (b) the digital controller door being opened and closed, (c-i) the cooking of the cooking appliance being paused or completed, or (c-ii) the cooking being in progress, displaying, by the OS controller, the cooking interface on the display. The cooking interface may include a cooking control input interface, a cooking process display interface, and a mini-controller interface.

The informational interface may display information unrelated to cooking of the cooking appliance.

The method may further comprise, in response to the cooking appliance performing a cooking function, displaying, by the OS controller, the mini-controller interface in a first area of the display where the informational interface has been displayed.

The method may further comprise in response to an occurrence of the movement of the mini-controller interface to a specific position, storing, by the OS controller, therein a mapping between the specific position of the mini-controller interface and identification information of an image or a video or an application displayed on the information interface; and may display, by the OS controller, the mini-controller interface at the specific position on the information interface where the image or the video or the application is displayed, based on the stored mapping.

A home appliance according to the present invention includes a functional unit, a display which instructs the operation of the functional unit and provides a human interface, and a OS controller which controls the display, wherein the display displays an image or video and receives a touch input, and the display is divided into a first area and a second area. In addition, the OS controller displays at least one of an interface necessary for controlling the operation of the home appliance or an interface indicating the operation state of the home appliance on the first area of the display. The second area of the display displays an interface different from the interface output to the first area, and the interface displayed in the first area is displayed on the uppermost layer of the display and is in a state of being able to receive a touch input, and the OS controller removes or displays the interface displayed in the first area according to the touch input made to the display or the operation state of the home appliance.

A cooking appliance according to the present invention includes a functional unit including a cavity for receiving food, and one or more functional components, the functional unit being configured to provide a cooking function; and the digital controller door coupled to the functional unit, the digital controller door including a display configured to display an image and receive a touch input. In addition, an operating system, OS, controller displays a current screen in the display, the current screen including at least one of a cooking interface, an informational interface, a mini-controller interface and a temporal interface, and in response to an occurrence of at least one of receiving the touch input on the display, a condition change of the functional unit and a condition change of the digital controller door, transition the current screen of the display to an updated screen that includes changing the at least one of cooking interface, an informational interface, a mini-controller interface and a temporal interface.

The OS controller display a main control interface including a plurality of buttons or icons in a first area of the display, and display the current screen in a second area of the display.

Under control of the OS controller, the first area of the display may display one of a temporal interface, a cooking interface, or an informational interface, and the second area thereof displays a main control interface.

The functional unit may be configured to provide a cooking function. The home appliance may be a cooking appliance including a digital controller door providing the human interface.

The OS controller may be configured to always display the main control interface on the display. The main control interface may include a home button, a back button, and a main stop button to which the touch input from a user is applied.

A method for providing an interface on a cooking appliance, wherein the cooling appliance includes a functional unit configured to provide a cooking function; and the digital controller door configured to provide a human interface, wherein the method comprises: displaying, an operating system, OS, controller of the digital controller door, a current screen in the display, the current screen including at least one of a cooking interface, an informational interface, a mini-controller interface and a temporal interface; and in response to an occurrence of at least one of receiving a touch input on the display, a condition change of the functional unit and a condition change of the digital controller door, transitioning, by the OS controller, the current screen of the display to an updated screen that includes changing the at least one of cooking interface, an informational interface, a mini-controller interface and a temporal interface.

The mini-controller is provided when exiting the cooking interface during cooking. During cooking, either the cooking interface or the mini-controller interface may be displayed.

In accordance with the present invention, the various software or hardware of the door coupled to the cooking appliance may cooperate smoothly with the control component for controlling the cooking appliance, and the interface for controlling the cooking appliance may be provided.

Further, in accordance with the present invention, the interface for providing interface-related control of the whole cooking appliance and the interface for controlling a cooking state thereof may be provided, respectively, such that a user may conveniently control the cooking appliance.

Further, in accordance with the present invention, the human interface (i.e., a user interface) may be provided based on a use pattern of the cooking appliance.

The effects of the present invention are not limited to the above-described effects, and those skilled in the art may easily derive various effects of the present invention from the configuration of the present invention.

### BRIEF DESCRIPTION OF DRAWINGS

FIG. 1 is a conceptual diagram of a cooking appliance including a digital controller door according to an embodiment of the present invention.
FIG. 2 is a diagram illustrating components of a digital controller door and components of a functional unit according to an embodiment of the present invention.
FIG. 3 is a diagram illustrating categories of functions performed by an OS controller and a function controller according to an embodiment of the present invention.
FIG. 4 is a perspective view illustrating a cooking appliance according to an embodiment of the present invention.
FIG. 5 is a diagram illustrating a state in which the digital controller door 100 is opened in FIG. 4.
FIG. 6 is a perspective view illustrating a digital controller door of a cooking appliance according to an embodiment of the present invention.
FIG. 7 is a schematic view illustrating a position where a cooking appliance is disposed according to an embodiment of the present invention.
FIG. 8 is a diagram illustrating a configuration of classifying a human interface according to an embodiment of the present invention.
FIG. 9 is a diagram illustrating an example of a human interface according to an embodiment of the present invention.
FIG. 10 is a diagram in which a cooking interface according to an embodiment of the present invention is displayed.
FIG. 11 is a diagram in which a cooking interface according to another embodiment of the present invention is displayed.
FIG. 12 is a diagram showing an informational interface and a cooking interface according to an embodiment of the present invention.
FIG. 13 is a diagram illustrating a configuration of a mini-controller interface according to an embodiment of the present invention.
FIGS. 14 to 16 are diagrams illustrating a human interface according to an embodiment of the present invention.
FIG. 17 is a diagram illustrating an implementation scheme of a pop-up interface, that is, a mini-controller interface, according to an embodiment of the present invention.
FIG. 18 is a diagram illustrating a process in which a mini-controller is displayed or disappears according to an embodiment of the present invention.
FIG. 19 is a diagram showing a flow of screen switching in a cooking completion process according to an embodiment of the present invention.
FIG. 20 is a diagram illustrating a process in which an OS controller provides a human interface according to an embodiment of the present invention.
FIG. 21 is a diagram illustrating a process of displaying a cooking interface according to an embodiment of the present invention.
FIG. 22 is a diagram illustrating a process of presenting a cooking time duration suitable for a cooking target material according to an embodiment of the present invention.
FIG. 23 is a diagram of storing and applying a location when a user has moved the location of a mini-controller interface according to an embodiment of the present invention.

Hereinafter, embodiments of the present invention will be described in detail with reference to the drawings so that those skilled in the art to which the present invention pertains can easily implement the present invention. The present invention may be implemented in several different forms and is not limited to the embodiments described herein.

In order to clearly describe the present invention, parts irrelevant to the description are omitted, and the same reference numerals refer to the same or similar components throughout the specification. Further, some embodiments of the present invention will be described in detail with reference to the example drawings. In adding reference numerals to the components of each drawing, the same components may be denoted by the same reference numerals as much as possible even though the components are shown in different drawings. In addition, in describing the present invention, when it is determined that a detailed description of related known components or functions may obscure the gist of the present invention, the detailed description thereof may be omitted.

It will be understood that, although the terms "first", "second", "third", and so on may be used herein to describe various elements, components, areas, layers and/or units, these elements, components, areas, layers and/or units should not be limited by these terms. These terms are used to distinguish one element, component, area, layer or unit from another element, component, area, layer or unit. Thus, a first element, component, area, layer or unit as described under could be termed a second element, component, area, layer or unit, without departing from the scope of the present invention. It will be understood that when a first element or layer is referred to as being "connected to", "jointed to" or "coupled to" a second element or layer, the first element may be directly connected to or jointed to or coupled to the second element or layer, or one or more intervening elements or layers may be present therebetween. In addition, it will also be understood that when an element or layer is referred to as being "between" two elements or layers, it may be the only element or layer between the two elements or layers, or one or more intervening elements or layers may also be present therebetween.

In addition, in the implementation of the present invention, the component may be subdivided for convenience of description. However, this component may be implemented in one device or module, or one component may be implemented so as to be distributed into a plurality of devices or modules.

The present invention relates to a technique for controlling a cooking appliance using a digital controller door disposed at a front surface of the cooking appliance.

According to the present invention, a door of a microwave oven disposed on an oven or a gas stove includes a LCD or OLED screen. An Android of the LCD or OLED screen and a microcomputer of the microwave oven cooperate with each other. An LCD or OLED component operates according to various operating/external environments of the microwave oven or controls a specific function of the microwave oven.

The digital controller door of the present invention may be combined with the cooking appliance to open and close the inside of the cooking appliance. An embodiment of the cooking appliance of the present invention is a microwave oven. However, embodiments of the present invention is not limited thereto. An embodiment of the cooking appliance including the digital controller door of the present invention includes each of various cooking appliances which includes a door equipped with a display such as an LCD or OLED providing various user interfaces such as a touch screen, and is capable of storing and cooking food therein. And embodiments of the present invention is not limited to a specific display panel type.

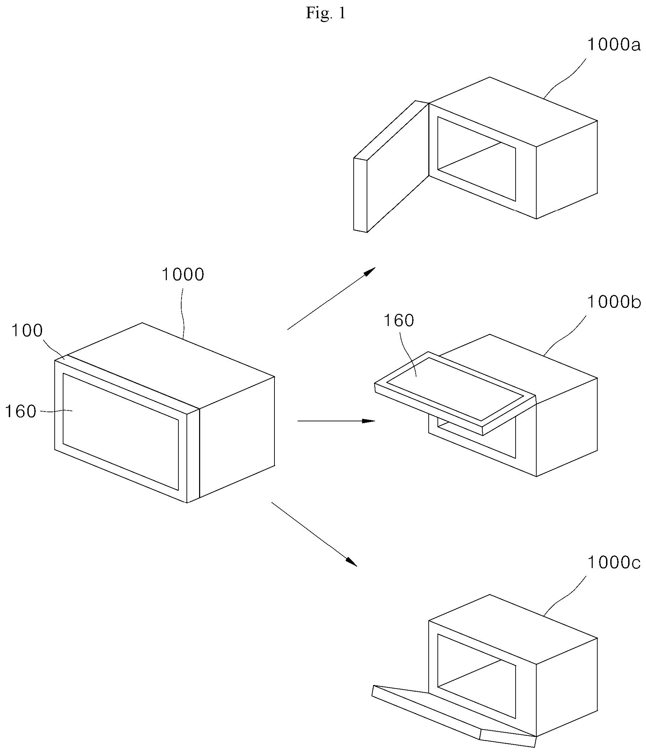

FIG. 1 is a conceptual diagram of a cooking appliance including a digital controller door according to an embodiment of the present invention.

The cooking appliance 1000 includes a digital controller door 100 preferably at a front surface thereof. The digital controller door 100 includes one or preferably two or more displays, and the display of the digital controller door 100 may display information about the inside of the cooking appliance 1000 or information related to an operation thereof to the user. The display of the digital controller door 100 may provide a touch input interface for receiving a predetermined command from the user.

A manner in which the digital controller door 100 is opened may include an embodiment 1000a, 1000b, or 1000c. 1000a shows an embodiment in which the digital controller door 100 pivots around a left side of the cooking appliance 1000a to open the right side of the cooking appliance 1000a, and open the inside of the cooking appliance 1000a. 1000b shows an embodiment in which the digital controller door 100 pivots around a top side of the cooking appliance 1000b to open the bottom side of the cooking appliance 100b, and open the inside of the cooking appliance 1000b. 1000c shows an embodiment in which the digital controller door 100 pivots around a bottom side of the cooking appliance 1000c to open the top side of the cooking appliance 1000c, and open the inside of the cooking appliance 1000c.

A display 160 may be mounted on the front surface of the digital controller door 100 to provide various information to a user. The user may know the cooking state of the cooked food on the display 160. The display 160 may be embodied as an LCD. However, embodiments of the present invention is not limited thereto, and the display 160 may include various display panels. In addition, a touch panel for touch input may be coupled to the display 160.

The digital controller door 100 controls the operation of the cooking appliance 1000 and outputs various information. The cooking appliance 1000 performs cooking using microwaves or heater heat. Accordingly, a digital controlling function provided by the digital controller door 100 and a cooking function of the cooking appliance 1000 are provided in different ways and in different areas.

The digital controller door 100 of the present invention may serve as a kind of a hub. That is, the digital controller door 100 may serve as a hub of another home appliance and display information transmitted from another home appliance on the display 160. In this process, the user may obtain other information other than the cooking food on the display 160. In addition, the user may input a command necessary for cooking and various other commands to the display 160 in a touch manner.

To this end, in accordance with the present invention, a method and a configuration in which the digital controller door 100 and the cooking appliance 1000 respectively include independent control components, and these control components cooperate with each other to control the function of the cooking appliance will be described.

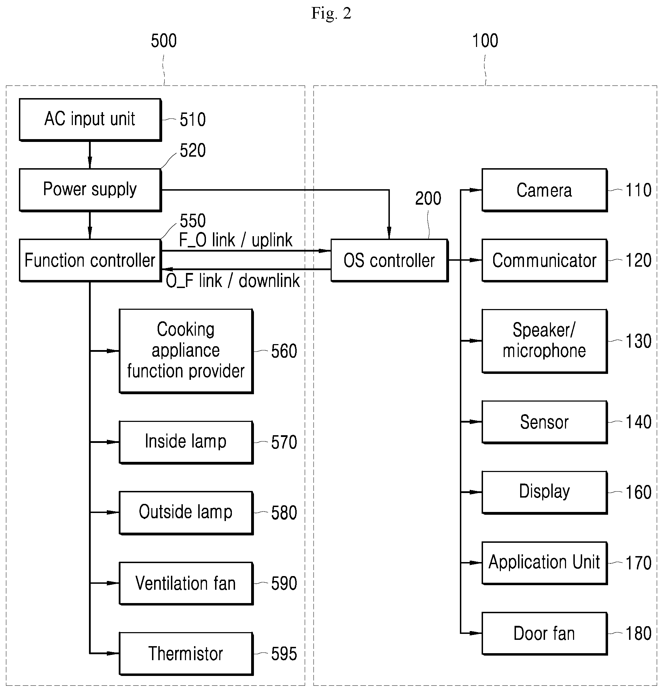

FIG. 2 is a diagram illustrating components of a digital controller door and components of a functional unit according to an embodiment of the present invention. Each of the components is conceptually disposed and is not limited to a specific physical location or material.

The digital controller door 100 may operate as an Internet-of-things hub. The digital controller door 100 may include an OS controller 200. In addition, the digital controller door 100 may include a camera 110. In addition, the digital controller door 100 may include a communicator 120. In addition, the digital controller door 100 may include a speaker/microphone 130. In addition, the digital controller door 100 may include a sensor 140. In addition, the digital controller door 100 may include the display 160. In addition, the digital controller door 100 may include an application unit 170. In addition, the digital controller door 100 may include a door fan 180. The door fan may be embodied as a direct current (DC) fan and cools the heat of the digital controller door 100. In particular, the door fan 180 cools heat generated from the display 160.

Hereinafter, the OS controller 200, the camera 110, the communicator 120, the speaker/microphone 130, the sensor 140, the display 160, the application unit 170, and the door fan 180 are referred to as elements or components of the digital controller door 100.

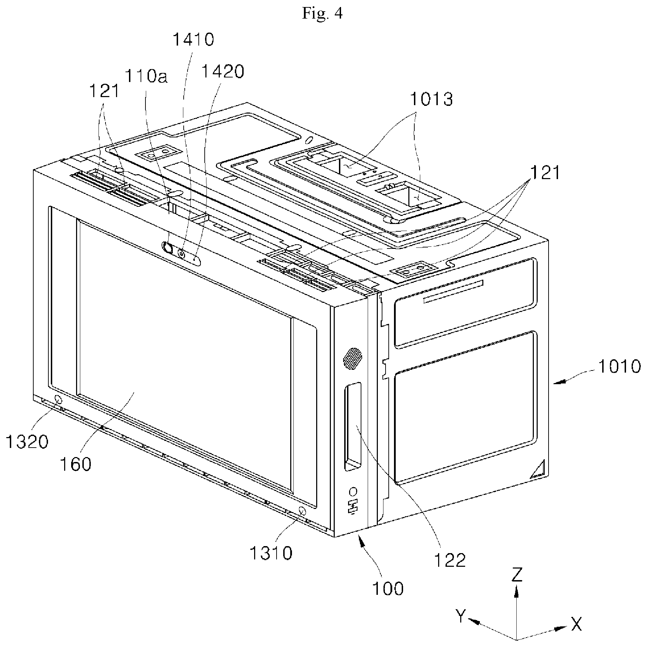

The functional unit 500 includes an AC input unit 510, a power supply 520, a function controller 550, a cooking appliance function provider 560, an inside lamp 570, an outside lamp 580, a ventilation fan (vent fan) 590, etc. The functional unit 500 and the digital controller door 100 are logically configured for the description of the present invention. The functional unit 500 may be implemented as a body 1010 illustrated in FIG. 4. Accordingly, the functional unit 500 may further include various physical components necessary for implementation as the body 1010 in addition to the components illustrated in FIG. 2.

The OS controller 200 controls various components of the digital controller door 100. In addition, the OS controller 200 transmits a predetermined signal to the function controller 550, and allows the function controller 550 to control the performance of a specific function of the cooking appliance 1000. In addition, the function controller 550 may transmit a signal to the OS controller 200. This allows the function controller 550 to inform the OS controller 200 of a result related to the performance of a specific function of the cooking appliance 1000. The OS controller 200 may operate based on a specific OS (e.g., Android).

According to an embodiment, the function controller 550 and the OS controller 200 may operate independently and may communicate a predetermined signal with each other when there is information to be notified to each other. A type of signal may be based on various communication protocols such as wired communication or wireless communication. According to an embodiment, when the OS controller 200 receives information from the user and is instructed to perform a specific function of the cooking appliance, the OS controller 200 may transmit a specific signal to the function controller 550. In this case, the function controller 550 operates the functional unit 500, for example, the body 1010.

The function controller 550 may be embodied as a microcomputer for generating a signal for operating the functional unit 500, for example, the body 1010.

The camera 110 may be disposed on the digital controller door to photograph the outside of the cooking appliance 1000, photograph the surroundings, or photograph a cooking space inside the cooking appliance 1000.

In addition, the camera 110 may be disposed inside the digital controller door 100. The camera 110 may photograph the inside of the cooking appliance 1000 to allow the user to check the cooking state of the food stored therein.

Accordingly, the camera 110 may be disposed to face outwardly of the digital controller door 100 (toward the user) and to face inwardly of the digital controller door 100 (toward the inside of the cooking appliance). In this case, the display 160 may output an image obtained by photographing the outside out of the cooking appliance or the inside of the cooking appliance based on the cooking state or a state of the function performed by the digital controller door 100.

The communicator 120 may perform various types of wired or wireless communication functions. The communicator may communicate with another device (e.g., an external server, a hub disposed in a home, or another home appliance) using a communication protocol such as Wi-Fi, Bluetooth, or the like.

The speaker/microphone 130 may generate a voice, an alarm sound, etc. necessary for the operation of the cooking appliance 1000, and may receive a predetermined external voice command or an external sound. The speaker/microphone 130 may be integral with each other or may be disposed at different positions.

The sensor 140 senses an environment outside or inside the cooking appliance 1000. For example, the sensor 140 may include a temperature sensor, an illuminance sensor, a human sensor, a humidity sensor, etc.

The display 160 outputs visual information to be provided to a user. The information provided from the display 160 includes a cooking function or state of the cooking appliance 1000 in operation, an interface for controlling the cooking appliance 1000, and information on a surrounding environment in which the cooking appliance 1000 is disposed.

In addition, when the digital controller door 100 operates as an Internet-of-things hub, the display 160 may display various information in addition to cooking related information. In addition, the display 160 may convert a user's touch into an input signal.

The application unit 170 stores therein various application programs as executed by the digital controller door 100, and the OS controller 200 may execute the application programs stored in the application unit 170 and may display the execution results on the display 160.

The door fan 180 embodied as the direct current fan is configured to cool heat generated in various electronic devices related to a digital controller door. The door fan 180 may cool the heat generated from the display 160 or the OS controller 200.

The OS controller 200 may download various application programs through the communicator 120 and store and install the application programs in the application unit 170.

The application program according to an embodiment of the present invention includes an application program directly or indirectly related to the operation or function of the cooking appliance 1000, such as an application program for controlling the cooking of the cooking appliance 1000, an application program related to an image or a video to be displayed during the operation of the cooking appliance 1000, etc. In this case, the OS controller 200 may control a function of the cooking appliance 1000 by controlling the function controller 550 using the application program.

In addition, the application program according to an embodiment of the present invention includes an application program necessary for the digital controller door 100 to operate as the Internet of Things hub.

The AC input unit 510 constituting the functional unit 500 receives power required for the cooking appliance 1000 to operate. The supplied power is provided to the function controller 550 and the OS controller 200 through the power supply 520.

The function controller 550 controls the functions of the cooking appliance 1000. In this regard, the function controller 550 receives a signal from the OS controller 200 and controls the functions of the cooking appliance 1000. The function controller 550 may control an operation of each of the cooking appliance function provider 560, the inside lamp 570, the outside lamp 580, the ventilation fan (Vent Fan) 590, and the thermistor 595 according to the signal received from the OS controller 200. Hereinafter, the cooking appliance function provider 560, the inside lamp 570, the outside lamp 580, the ventilation fan 590, and the thermistor 595 are referred to as elements or components of the functional unit 500.

The cooking appliance function provider 560 generates microwaves or heater heat to cook food stored in the cooking appliance 1000.

The inside lamp 570 is disposed inside the cooking appliance 1000 that is opened and closed by the digital controller door 100. When the digital controller door 100 is opened or closed, the inside lamp 570 may be turned on and off. Alternatively, when the cooking appliance 1000 is cooking the food, the inside lamp 570 may be turned on so that the internal camera may capture an image thereof.

The outside lamp 580 is disposed at a lower end or an upper end of the cooking appliance 1000. When the cooking appliance 1000 is disposed on top of a separate cooktop, the outside lamp 580 may be disposed at a lower end of the cooking appliance 1000.

The ventilation fan 590 discharges heat generated from the cooktop to the outside.

The thermistor 595 is a component disposed in the functional unit 500 to sense a temperature. One or more thermistors 595 may be disposed at the cooking appliance 1000.

According to an embodiment of the present invention, the thermistor 595 may provide information on the sensed temperature to the function controller 550. According to another embodiment of the present invention, the thermistor 595 may be included in the sensor 140, and in this case, information on the sensed temperature may be provided to the OS controller 200 that controls the sensor 140.

The food stored in the cooking appliance 1000 is cooked via the operation of the cooking appliance function provider 560. Even in this process, the function controller 550 and the OS controller 200 may communicate information with each other per a preset time interval.

The OS controller 200 provides a UI/UX function. In addition, the OS controller 200 transmits a predetermined signal to the function controller 550, and the function controller 550 controls the operation of the cooking appliance 1000, for example, the body 1010 or the functional unit 500. In addition, the function controller 550 may control an operation of the cooking appliance function provider 560 and provide an information value generated therefrom during control to the OS controller 200.

Accordingly, the control flow of the OS controller 200 and the function controller 550 is configured such that the OS controller 200 transmits a predetermined signal to the function controller 550 and then receives a predetermined control result from the function controller 550.

The OS controller 200 and the function controller 550 may communicate with each other in a wired or wireless manner. The OS controller 200 and the function controller 550 may communicate with each other using various communication protocols, and embodiments of the present invention are not limited to a specific communication protocol.

As illustrated in FIG. 2, a communication link via which the function controller 550 transmits predetermined data to the OS controller 200 or performs control is referred to as a F_O link or an uplink. A communication link via which the OS controller 200 transmits predetermined data to the function controller 550 or performs control is referred to as an O_F link or a downlink. However, embodiments of the present invention are not limited to a specific name or a direction such as upward/downward, and the links may be distinguished from each other based on a direction of data transmission between the components 550 and 200.

In an embodiment of the present invention, the link may physically use one or more lines or may use one or more communication media. In addition, in accordance with the present invention, a name is separately given to each data transmission direction in order to distinguish logically the data transmission directions from each other.

According to an embodiment of the present invention, in the case of the wired communication, the OS controller 200 and the function controller 550 may communicate with each other using a communication protocol such as Universal asynchronous receiver/transmitter (UART) and Universal Serial Bus (USB).

According to an embodiment of the present invention, in the case of the wireless communication, the OS controller 200 and the function controller 550 may communicate with each other using a communication protocol such as Zigbee, Wi-Fi, and Bluetooth.

Each of the OS controller 200 and the function controller 550 may include a separate memory (internal memory), and may store, in the memory, function result information or error information generated in the process of performing a function.

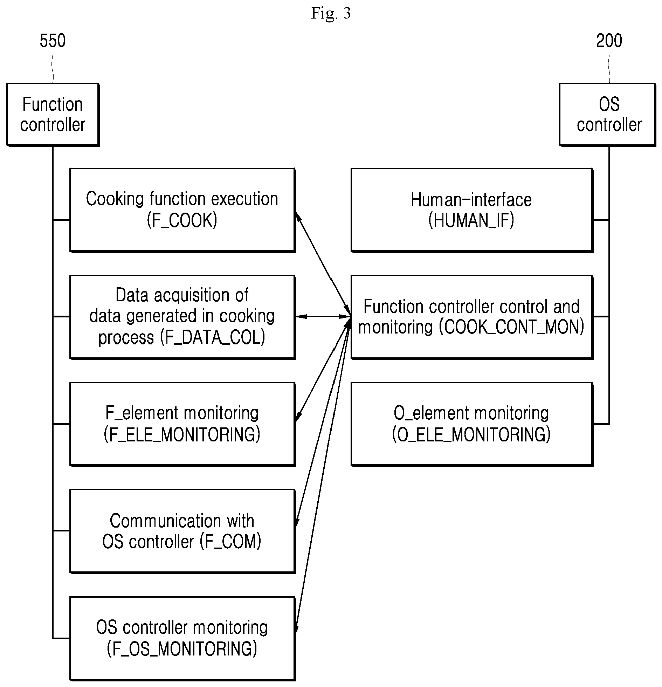

FIG. 3 is a diagram illustrating categories of functions performed by an OS controller and a function controller according to an embodiment of the present invention. Each function includes a case in which each of the controllers 200 and 550 performs a corresponding function.

Each of the controllers 200 and 550 may perform the functions simultaneously or sequentially.

The function controller 550 controls the functional unit 500 that provides a cooking function. The operating system (OS) controller 200 transmits a signal to the function controller 550. The function controller 550 instructs an operation of the functional unit 500. The operating system (OS) controller 200 controls the digital controller door 100 that provides a human interface.

The functions performed by the function controller 550 include cooking function execution F_COOK. In addition, the functions performed by the function controller 550 include data acquisition F_DATA_COL of data generated in the cooking process. In addition, functions performed by the function controller 550 include F_element monitoring F_ ELE MONITORING. In addition, functions performed by the function controller 550 include communication F_COM with the OS controller 200. In addition, functions performed by the function controller 550 include OS controller monitoring F_OS_MONITORING. The OS controller 200 and the function controller 550 may operate independently, and may inform the state or operation status of each component via transmission and reception of signals to and from each other.

In the cooking function execution F_COOK, the function controller 550 controls the cooking appliance function provider 560 so that the cooking appliance 1000 may perform cooking. Alternatively, in addition to cooking such as heating, a function in which the function controller 550 controls the operation of the inside lamp 570, the outside lamp 580, and the ventilation fan 590 may be included in the cooking function execution F_COOK.

The function of the data acquisition F_DATA_COL of the data generated in the cooking process is a function of the function controller 550 collecting or acquiring various result values calculated by the elements or the components of the functional unit 500 or data related to the current state in the cooking function execution F_COOK process.

The F_element monitoring (F_ELE_MONITORING) refers to a function in which the function controller 550 monitors elements or components of the functional unit 500. The function controller 550 may monitor whether each element or component operates properly or whether each element or component operates according to a previous instruction to perform a function.

The communication F_COM function with the OS controller means that the function controller 550 provides data obtained in F_DATA_COL, F_ELE_MONITORING, etc. to the OS controller 200.

The OS controller monitoring F_OS_MONITORING function refers to a function in which the function controller 550 transmits a predetermined packet to the OS controller 200 to check whether the OS controller 200 is operating properly.

The F_COM and F_OS_MONITORING functions may be implemented as one function. That is, even when the cooking function is not performed, the function controller 550 transmits the data obtained through the F_ELE_MONITORING to the OS controller 200. The function controller 550 may check whether the OS controller 200 is in a normal state or an abnormal state based on whether the OS controller 200 has transmitted an acknowledgement (ACK) response to the transmitted data.

The functions performed by the OS controller 200 include a human-interface HUMAN_IF. In addition, the functions performed by the OS controller 200 include function controller control and monitoring COOK_CONT_MON. In addition, the functions performed by the OS controller 200 include O_element monitoring O_ELE_MONITORING. In this regard, one embodiment of the function controller control and monitoring COOK_CONT_MON is that the OS controller 200 transmits a predetermined signal to the function controller 550 so that the function controller 550 may control the functional unit 500, that is, the body 1010.

The human-interface HUMAN_IF function refers to a function in which the OS controller 200 outputs a user interface, such as various information or a menu necessary for controlling the cooking appliance, and receives a user's touch input thereto.

One embodiment of the function controller control and monitoring COOK_CONT_MON is that the OS controller 200 provides a signal to the function controller 550 so that the function controller 550 controls the operation of the functional unit 500, that is, the body 110. In addition, one embodiment of the function controller control and monitoring COOK_CONT_MON is that predetermined information collected by the function controller 550, for example, information necessary for monitoring the state or an operation status of the functional unit 500, that is, the body 110, is transmitted to the OS controller 200 in a form of a predetermined wired or wireless signal.

More specifically, when the user selects a specific cooking function in the human-interface HUMAN_IF function, the OS controller 200 may instruct the function controller 550 to execute the cooking function.

In addition, the OS controller 200 may perform monitoring to receive values of the operation states or cooking results of the elements or the components constituting the functional unit 500 from the function controller 550. All these functions are included in the function controller control and monitoring COOK_CONT_MON. Accordingly, the function controller control and monitoring COOK _CONT_ MON of the OS controller 200 is related to five functions of the function controller 550.

The O_element monitoring O_ELE_MONITORING refers to a function in which the OS controller 200 monitors the elements or the components of the digital controller door 100. The OS controller 200 may monitor whether each of the elements or the components operates properly, or whether each element or component operates according to a previous instruction to perform a function.

As shown in FIG. 3, the function controller 550 and the OS controller 200 perform respective given functions independently but in association with each other. Accordingly, the function controller 550 checks whether the OS controller 200 operates normally or not in the process of performing the function, while the OS controller 200 checks whether the function controller 550 operates normally or not in the process of performing the function. When an abnormality occurs in a component of one of the function controller 550 and the OS controller 200, the other of the function controller 550 and the OS controller 200 may cope with this situation.

Hereinafter, a schematic outer appearance and configuration of a cooking appliance including the digital controller door 100 of the present invention will be described. This corresponds to one embodiment of the present invention, and a scheme and a direction in which the digital controller door 100 is opened may be implemented in various ways.

The present invention relates to a scheme for controlling a cooking appliance using a digital controller door disposed at a front surface of the cooking appliance.

According to the present invention, a door of a microwave oven disposed on top of an oven or a gas stove acts as a LCD screen (an embodiment of a display). The Android (an embodiment of an OS controller) of the LCD screen and the microcomputer (an embodiment of a function controller) of the microwave oven cooperate with each other. An LCD component operates according to various operating/external environments of the microwave oven or controls a specific function of the microwave oven.

The digital controller door of the present invention may be combined with the cooking appliance to open and close the inside of the cooking appliance. An embodiment of the cooking appliance of the present invention is a microwave oven. However, embodiments of the present invention is not limited thereto. An embodiment of the cooking appliance including the digital controller door of the present invention includes each of various cooking appliances which includes a door equipped with a display such as a LCD providing various user interfaces such as a touch screen, and is capable of storing and cooking food therein.

A display may be mounted on a front surface of a digital controller door provided in the cooking appliance of the present invention to provide various information to a user. The user may know the cooking state of the cooked food on the display.

In addition, when the display is connected to another home appliance to serve as a hub of the home appliances, the information other than cooking food may be obtained through the display. In addition, a command necessary for cooking and various other commands may be input to the display in a touch manner.

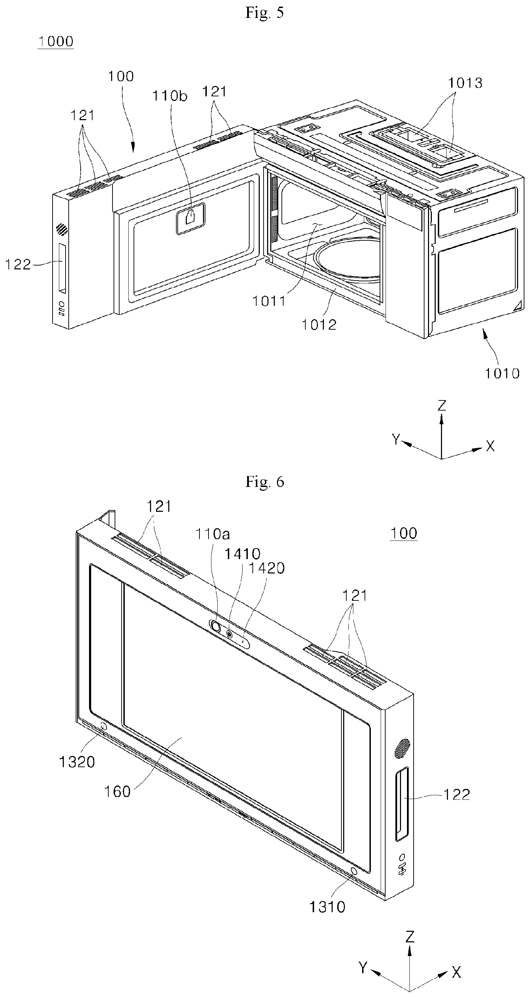

FIG. 4 is a perspective view illustrating a cooking appliance according to an embodiment of the present invention. FIG. 5 is a diagram illustrating a state in which the digital controller door 100 is opened in FIG. 4.

According to an embodiment of the present invention, the sensor 140 of FIG. 2 is implemented as an illuminance sensor 1410 and an infrared sensor 1420. The illuminance sensor 1410 disposed next to the camera 110a detects light in a space in which the cooking appliance 1000 is disposed, for example, illuminance of the kitchen. The infrared sensor 1420 disposed next to the illuminance sensor 1420 detects a person near the cooking appliance 1000.

The sensor 140 according to another embodiment of the present invention may be disposed in another area of the digital controller door 100.

The cooking appliance according to the embodiment may be disposed at a position spaced apart from the heating cooking device in the vertical direction above a position where a heating-type oven, a gas stove, etc. are disposed.

Due to the arrangement of the cooking appliance, a user may conveniently use the heating cooking device including the cooking appliance. In addition, the cooking appliance may serve as a hood of the heating cooking device disposed under the cooking appliance. In this case, the cooking appliance may include components for use as the hood.

The cooking appliance may cook food using microwaves belonging to electromagnetic waves and/or heater heat. The cooking appliance may include the body 1010 in which a cavity 1011 is formed, and the digital controller door 100 configured to open and close the cavity 1011. The body 1010 is an embodiment of the functional unit 500 of FIG. 2 as described above. According to an embodiment of the present invention, the body 1010 may act in the same manner as the functional unit 500 may. Alternatively, according to an embodiment of the present invention, the components of the functional unit 500 may be implemented in the body 1010. Accordingly, in various embodiments, the functional unit 500 and the body 1010 may be interchangeable with each other.

Food to be cooked may be placed in the cavity 1011. The digital controller door 100 may be disposed in front of the cavity 1011 and pivotally mounted at the body 1010 to open and close the cavity 1011.

A ventilation hole 1013 for discharging air suctioned from a suction unit provided at a lower portion of the body 1010 to the outside may be provided at an upper portion of the body 1010. A suction unit may be provided at a lower portion of the body 1010 of the cooking appliance. Accordingly, the cooking appliance may serve as a hood that sucks air discharged from the heating cooking device disposed below the cooking appliance and discharges the air to the outside.

The body 1010 may further include a front panel 1012 provided along an edge of an inlet of the cavity 1011. One surface of the front panel 1012 faces one surface of a choke member when the digital controller door 100 is closed, thereby closing the cavity 1011.

The front panel 1012 may be constructed to surround the edge of the inlet of the cavity 1011 and protrude in a frontward direction and has a predetermined width. Accordingly, when the digital controller door 100 is closed, the edge portion of the digital controller door 100 and the cavity 111 may overlap each other.

Due to this structure, the front panel 1012 may seal the cavity 1011 in a state in which the digital controller door 100 has been closed, thereby preventing oil, moisture, oil vapor, etc. generated during the cooking process of the food placed in the cavity 1011 from being leaked out to the outside through the inlet of the cavity 1011.

In the structure of FIG. 4, the speaker 1310 and the microphone 1320 which are components of the speaker/microphone 130, may be disposed at the lower end of the digital controller door 100. However, the present invention is not limited to such a specific position, and the speaker 1310 and the microphone 1320 may be disposed in various areas of the digital controller door 100.

In addition, the speaker 1310 may include at least one speaker. The microphone 1320 may include at least one microphone.

FIG. 6 is a perspective view illustrating a digital controller door of a cooking appliance according to an embodiment of the present invention.

The digital controller door 100 may include controller hardware (e.g., a hardware chip) or controller software (software including programs) that executes a predetermined algorithm and performs following tasks based on sensing results from various sensors disposed at the cooking appliance or the door and an operating state of the cooking appliance.

In FIGS. 4 to 6, a reference numeral 121 denotes a through hole through which air is introduced or discharged. A first camera 110a and the sensor 140 may be disposed on the front surface of the digital controller door 100. The sensor 140 includes a human sensor, an illuminance sensor, etc.

The display 160 is used to control the cooking appliance 1000 or displays an operation process in the cooking appliance 1000. The ventilation hole 1013 may include a suction portion defined at a lower end of the body 1010 and a discharge portion defined at an upper end of the body 1010. A handle 122 is disposed on one side of the digital controller door 100 such that the user may open and close the digital controller door 100 using the handle.

A second camera 110b may be disposed on an inner side surface of the digital controller door 100, and the second camera 110b may photograph the inside of the cavity 1011 to check the cooking state.

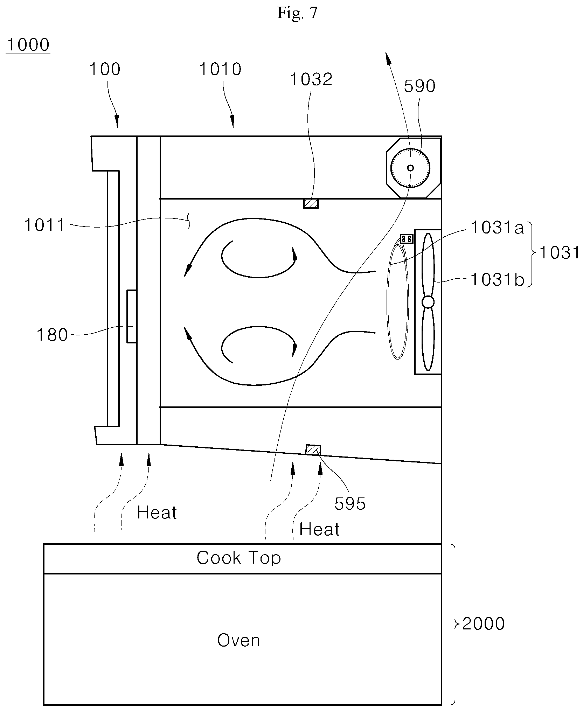

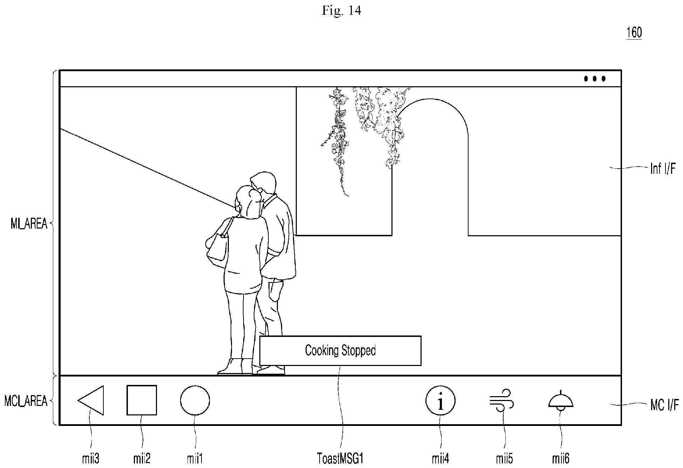

FIG. 7 is a schematic view illustrating a position where a cooking appliance is disposed according to an embodiment of the present invention. In FIG. 14, the flow of air is indicated by a solid line arrow, and the transfer direction of heat is indicated by a hidden line arrow. A heating cooking device 2000 may include, for example, an oven and a cooktop disposed on top of the oven.

The cooking appliance may include a convection-based heating device 1031 and a microwave generating device 1032 to heat food accommodated in the cavity 1011.

The convection-based heating device 1031 may generate heat to heat food, and the microwave generating device 1032 may generate microwaves to heat food. The user may select and operate one of the convection-based heating device 1031 or the microwave generating device 1032 to heat and cook food.

The convection-based heating device 1031 may include a convection heater 1031a and a convection fan 1031b. The convection heater may generate heat to heat food accommodated in the cavity 1011. The convection fan 1031b may force the air in the cavity 1011 heated by the convection heater 1031a to flow in the cavity 1011.

When the convection fan 1031b operates, the heated air may be smoothly convectively circulated in the cavity 1011, and accordingly, heat is uniformly supplied to an entirety of the cavity 1011, so that an entirety of the food accommodated in the cavity 1011 may be evenly cooked.

In order to prevent the display 160 provided in the digital controller door 100 from being overheated by the heated air coming up from the heating cooking device disposed under the cooking appliance, resulting in malfunction of or damage to the display 160, it is necessary to cool the display 160 and prevent external heat from being transferred to the display 160. The door fan 180 and the ventilation fan 590 may perform the above role.

The door fan 180 may be disposed inside the digital controller door 100. The door fan 180 may effectively cool the display 160 by flowing air toward the rear surface of the display 160.

In addition, the air flow discharged from the door fan 180 to the outside of the digital controller door 100 may form an air curtain to block the heat rising from the heating cooking device disposed under the cooking appliance.

The ventilation fan 590 may be disposed at a top of the body 1010 and may be disposed in a flow path of the ventilation hole 1013. The ventilation fan 590 may allow air coming up from the heating cooking device to flow to the ventilation hole 1013 to discharge the air to out of the cooking appliance.

Accordingly, when the ventilation fan 590 operates, a significant portion of the heated air coming up from the heating cooking device flows to the ventilation hole 1013 formed in the body 1010, and the flow rate of air heading to the display 160 of the digital controller door 100 may be relatively reduced. As a result, the flow rate of the heated air directed to the display 160 of the digital controller door 100 is reduced, thereby suppressing overheating of the display 160.

In order to block overheating of the display 160, it is necessary to appropriately use the door fan 180 and the ventilation fan 590. Since one of main purposes of the door fan 180 is to prevent the overheating of the display 160, the door fan 180 may operate in a low-speed rotation mode and a high-speed rotation mode based on the temperature condition of air approaching the digital controller door 100.

The door fan 180 has a small amount of air blown in the low-speed rotation mode and a large amount of air blown in the high-speed rotation mode. Therefore, the temperature of the display 160 may be effectively lowered by the door fan operating in the low-speed rotation mode when the temperature of the air is low and by the door fan operating in the high-speed rotation mode when the temperature of the air is high.

In order to reliably suppress the overheating of the display 160, it is advantageous to operate both the door fan 180 and the ventilation fan 590 and operate the door fan 180 in the high-speed rotation mode.

The thermistor 595 disposed at a bottom of the cooking appliance 1000 may sense the heat from the heating cooking device disposed under the cooking appliance 1000. In addition, the auto ventilation function may operate upon sensing the heat.

In the embodiment of FIG. 7, the outside lamp 580 may emit light toward the lower end. For example, when the user touches the digital controller door 100, the outside lamp 580 may be turned on. Alternatively, when a movement of a person is identified and ambient illuminance is lower than or equal to a predetermined reference (for example, illuminance 10 lux or lower), the outside lamp 580 may be turned on under the control of the OS controller 200.

In addition, the door lamp 195 may be disposed at a lower end of the digital controller door 100. For example, when a user touches the digital controller door 100, the door lamp 195 may be turned on. Alternatively, when a movement of a person is identified and ambient illuminance is lower than or equal to a predetermined reference (e.g., illuminance 10 lux or lower), the door lamp 195 may be turned on under the control of the OS controller 200.

According to an embodiment of the present invention, the outside lamp 580 may be controlled by the function controller 550. In this case, the OS controller 200 may instruct the function controller 550 to turn on/off the outside lamp 580.

According to another embodiment of the present invention, the outside lamp 580 may be directly controlled by the OS controller 200. In this case, the outside lamp 580 may be disposed in the functional unit 500, but may be controlled by the OS controller 200 of the digital controller door 100.

The digital controller door 100 may receive a user's command via a touch input to the display 160 and control the cooking appliance 1000 based on the command. In addition, the digital controller door 100 may control the cooking appliance 1000 based on a voice command input through the microphone 1320. That is, the microphone 1320 receives a user's voice, and the speaker 1310 outputs a predetermined sound. The display 160 outputs an image. Accordingly, the digital controller door 100 may provide a human interface.

The OS controller 200 may provide the human interface (i.e., a user interface) related to a task performed by the cooking appliance 1000. The human interface provided from the OS controller 200 may be output to the display 160, and the display 160 may receive a touch input from the user.

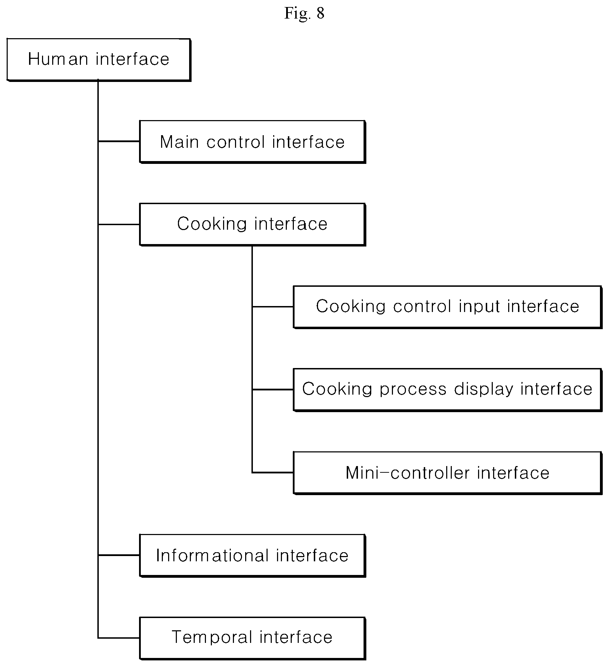

FIG. 8 is a diagram illustrating a configuration of classifying a human interface according to an embodiment of the present invention. Hereinafter, the interface refers to a human interface, that is, a user interface.

The human interface may be classified into a main control interface (abbreviated as MC I/F), a cooking interface (abbreviated as Cook I/F), an informational interface (abbreviated as Inf I/F), and a temporal interface (abbreviated as Temp I/F).

The main control interface MC I/F is an interface that is always provided by the OS controller 200 and is always displayed at a specific position of the display 160. The main control interface is an interface that allows an interface for checking various interfaces provided by the digital controller door 100 or invoking an interface for controlling cooking.

For example, the main control interface MC I/F may include a home button for processing a user's touch input, a back button for moving to a previous menu, and a main stop button for stopping an operation of a currently executed specific function. Alternatively, the main control interface MC I/F may include only a home button.

The main control interface MC I/F may be fixed at and displayed in a specific area of the display 160. Alternatively, the main control interface MC I/F displayed on a first area of the display 160 may be set to be displayed on a second area of the display 160 according to a user's setting.

The cooking interface Cook I/F indicates a cooking state when the cooking appliance 1000 performs a predetermined cooking function and provides an input interface that the user may control for the related cooking. The cooking interface CI may be subdivided into and may include a cooking control input interface and a cooking process display interface. In addition, an interface indicating a cooking state displayed in a reduced form is referred to as a pop-up interface (abbreviated as a pop-up) or a mini-controller interface (abbreviated as a mini-controller). The mini-controller is provided when exiting the cooking interface during cooking. During cooking, either the cooking interface or the mini-controller interface may be displayed.

The cooking control input interface includes an input interface that the user may touch so that the user may instruct the start of cooking or pause or stop the progress of cooking.

The cooking process display interface is an interface indicating a state in which cooking is in progress.

The informational interface Inf I/F is an interface that displays a specific background screen set by a user, displays information transmitted from an external source, or allows a user to perform web surfing.

When the informational interface Inf I/F outputs predetermined information and the user touches a specific area to check the specific information in detail, the OS controller 200 may activate a link URL disposed in the touched area and output new information to the display 160.

The temporary interface Temp I/F is an interface that temporarily displays information to inform the user of specific information. The temporary interface may automatically disappear after displaying information for a predetermined time duration (5 seconds or 10 seconds, etc.). In addition, when the user touches the information displayed on the temporary interface or touches an "OK" button displayed in the information, the displayed information may disappear. In an embodiment, a toast message is included in the temporary interface.

An area of the cooking interface displayed while the cooking is being performed may be minimized. The minimized cooking interface may be disposed in a partial area of the informational interface. The cooking interface may be minimized according to the user's touch or drag manner, and the minimized cooking interface (i.e., the mini-controller interface) may be disposed at various positions of the display 160.

The informational interface may not be output from the display 160 when the user touches the back button of the main control interface.

Hereinafter, in an embodiment of pressing a button or selecting a button, a user touches an image in a form of a button displayed on the display 160.

When the interface structure of FIG. 8 is applied, the cooking appliance including the digital controller door may provide a user experience (UX) for displaying a cooking progress screen in a cooking process.

That is, the digital controller door 100 controls a UX (for example, a cooking interface) for displaying a cooking progress screen. According to an embodiment, when the user exits the UX by pressing the home button (home key) displayed on the digital controller door, each of the existing cooking progress screen and the existing control screen may be reduced in size so as to be displayed as a small screen. The cooking progress screen and the control screen cannot be removed but may be continuously maintained while the cooking is in progress, and thus the efficiency of the user interface may be increased.

The cooking appliance 1000 including the digital controller door 100 may display the cooking state of the cooking appliance on the display (LCD screen) 160. In an embodiment, an inside picture may be taken using a camera inside the cooking appliance, and a current cooking situation (a situation in which the cooking is performed compared to an entire cooking time duration period, etc.) may be displayed based on the image.

The digital controller door may output an interface indicating the cooking state on an entirety of the display 160.

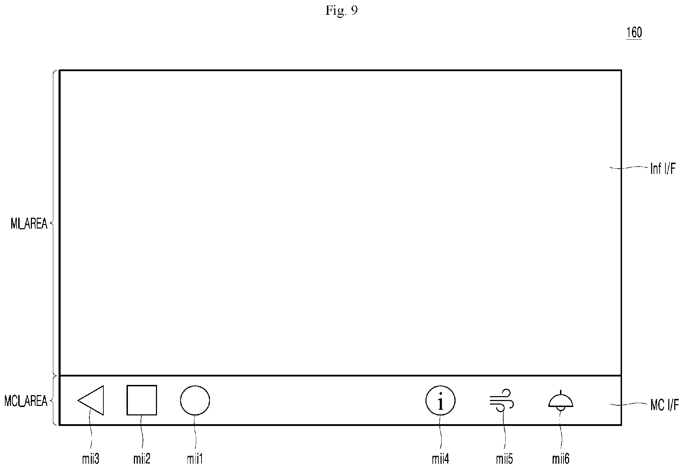

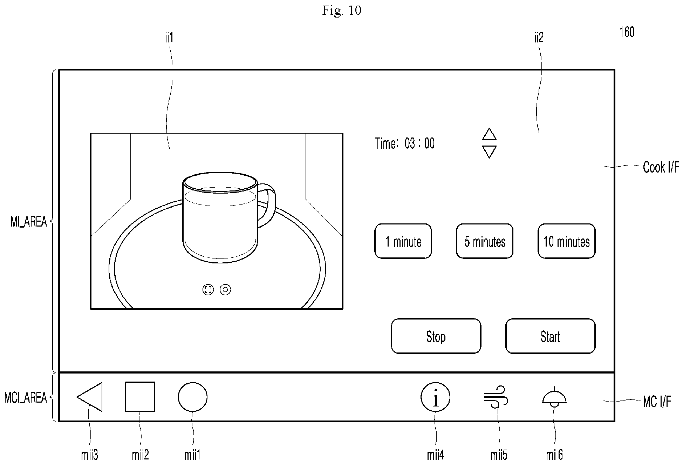

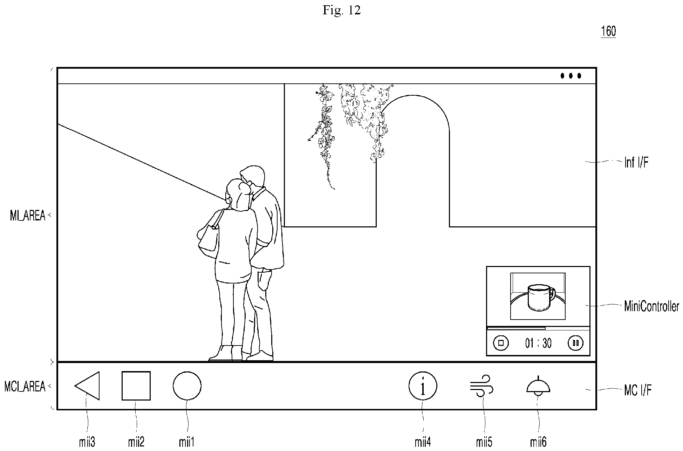

The entire display is divided into two areas. The main interface area MI_AREA is an area in which the Inf I/F of FIG. 9, which will be described later, is disposed, the Cook I/F of FIG. 10 is disposed, or the MiniController of FIG. 12 is disposed. Alternatively, the temporal interface may also be disposed in the main interface area. This refers to FIGS. 9, 10, 11, 12, 14, 15, 16, and 23.

The main control interface area MCI_AREA is an area in which the main control interface MC I/F is disposed in FIGS. 9 to 12. This refers to FIGS. 9, 10, 11, 12, 14, 15, 16, and 23.

FIG. 9 is a diagram illustrating an example of a human interface according to an embodiment of the present invention. This is an embodiment in which the main control interface MC I/F is displayed in a lower end area of the display 160. In addition, in an area on top of the main control interface MC I/F, the informational interface Inf I/F may output various information.

In one embodiment, the informational interface Inf I/F includes a background screen set by the user. In addition, in another embodiment, the informational interface includes a web search screen or a screen on which a video is displayed.

In the embodiment of FIG. 9, the main control interface MC I/F is disposed in the lower end area of the display 160. However, embodiments of the present invention are not limited thereto, and the main control interface MC I/F may be disposed in an upper end area or a left or right side area of the display 160.

The main control interface MC I/F may include interfaces such as a back button mii3, a home button mii2, and an off button mii1.

The back button mii3 is a button that is pressed to allow a current interface to switch to a previous step or a previously displayed interface. The home button mii2 shows a preset main menu (home menu), and the user may set various information in the main menu.

The off button mii1 may instruct an operation of turning off or restarting the digital controller door 100. In addition, the off button mii1 may instruct an operation of turning off or restarting the display 160. Alternatively, the off button mii1 may instruct an operation of turning off or restarting an entirety of the cooking appliance 1000.

In addition, the main control interface MC I/F may include an interface such as a help button for help, a button mii5 for controlling or showing an operation state of the ventilation fan 590, and a button mii6 for turning on/off the outside lamp 580.

The informational interface Inf I/F may display an image set by the user or a search screen, information necessary for the user, etc. When the cooking of the cooking appliance is to be controlled, the cooking interface Cook I/F may be displayed instead of the informational interface Inf I/F so that the cooking appliance 1000 may be controlled via a user's manipulation thereon.

The main control interface according to an embodiment of the present invention provides an interface for controlling the operation of each of the ventilation fan 590 and the outside lamp 580. The user may repeatedly touch the mii5 to turn on or off the operation of the ventilation fan 590 or increase or decrease the operation level of the ventilation fan 590.

In addition, when the auto ventilation operates, the operating state of the ventilation fan 590 may be displayed on the main control interface.

When the thermistor 595 detects the temperature, the ventilation fan 590 may automatically operate based on the temperature detection. This is referred to as the auto ventilation. The function controller 550 may automatically activate the auto ventilation function based on the temperature sensed by the thermistor 595 to prevent component failure or damage. That is, the function controller 550 may activate the auto-ventilation function when it is determined that the temperature of the thermistor is equal to or higher than a predetermined temperature, and accordingly, may notify the OS controller 200 of information indicating that the auto-ventilation function is being activated.

In response to reception of the notification, the OS controller 200 may display an auto ventilation operation state on the display 160.

The OS controller 200 may display, on the display 160, a pop-up message indicating that the auto ventilation is being activated when the temperature sensed by the thermistor 595 reaches a predetermined temperature condition. This is a function that the user may not cancel or change arbitrarily. Accordingly, the OS controller 200 may display information indicating that the auto ventilation operation is being performed on the display 160 and may also output a message indicating that the auto ventilation operation cannot be changed or cancelled. The user may not set a timer for this auto ventilation operation. The ventilation fan 590 is terminated when the auto ventilation has been terminated even though the user turns off the cooking appliance 1000 on the display 160.

In addition, the auto-ventilation may be executed when a timer is set. In this case, the OS controller 200 may display a remaining timer time on the display 160 when the auto-ventilation operation has been terminated. In addition, when the auto-ventilation operation ends and the timer time ends, the ventilation fan 590 is also turned off.

In one example, when the user starts to operate the ventilation fan 590 during the cooking, an operation intensity of the ventilation fan 590 may not be set to a turbo level (strong intensity). After the cooking has been finished, the ventilation fan 590 may operate in the turbo level as long as the previously set ventilation fan intensity is the turbo level.

As described above, the auto ventilation function refers to a function provided to protect components of the cooking appliance 1000. Accordingly, when an error occurs in a process in which the function controller 550 cooperates with the OS controller 200, the operations of other components of the functional unit 500 may be canceled, but the operation of the ventilation fan 590 executing the auto ventilation may be maintained. Similarly, even when there is no instruction from the OS controller 200, the function controller 550 may automatically start or end the operation of the ventilation fan 590 based on the temperature sensed by the thermistor 595.

Accordingly, when the auto ventilation is being executed, the OS controller 200 may display the auto ventilation situation in the area of mii5 among the areas of the main control interface of FIG. 9.

The OS controller 200 may change the color of the wind displayed on the mii5 or the size of the image to indicate the flow or intensity of the wind of the ventilation fan 590.

In addition, a control lock may be set to prevent the user from manipulating the human interface in the auto-vent situation.

When the control lock function is activated (turned on), the interfaces of the display 160 are locked and the touch thereon is not activated, and the function operation of the ventilation fan or the lighting may be restricted. For example, the OS controller 200 may control an entirety of the screen of the display 160 to be darkened and display an image such as a lock thereon, thereby displaying that the user cannot control the cooking appliance 1000 through the display 160.

In addition, the OS controller 200 may display a button interface allowing the user to be capable of "unlocking" the control lock after the control lock has been activated on the display 160. Thus, when the user presses the "unlock" button for a predetermined time duration (for example, 3 seconds), the locking of the input such as the touch onto the display 160 may be released.

Upon exiting the application displayed on the display 160 in the control lock state, the locked state may be maintained when re-executing the application later.

In response to that the ventilation fan 590 or the outside lamp 580 is in use, the control lock setting may be dimmed (darkened), and a setting guide message may also be changed.

FIG. 10 is a diagram in which a cooking interface according to an embodiment of the present invention is displayed. FIG. 10 illustrates a state in which a user has put an object (a water cup) containing a material to be cooked into the cooking appliance 1000 and then has closed the digital controller door 100. ii1 is an image captured by the second camera 110b inside the digital controller door 100. That is, the ii1 may display an image or a video obtained by capturing the inside of the cavity 1011, and may identify the object (e.g., the cup) containing the material to be cooked into which the user has put.

ii2 is an interface for setting a cooking time duration of the cooking appliance 1000, and refers to an embodiment of the cooking control input interface. The user may adjust the cooking time duration by selecting 1 minute, 5 minutes, 10 minutes, etc. or pressing an upper or lower triangle.

When the user presses the "Start" button, the OS controller 200 may control the function controller 550 so that the cooking appliance 1000 starts cooking according to a set time duration (for example, 3 minutes). In addition, when the user presses the "Stop" button, the OS controller 200 may set the time setting to 0 and may control the interface so that the user may set the cooking time duration again.

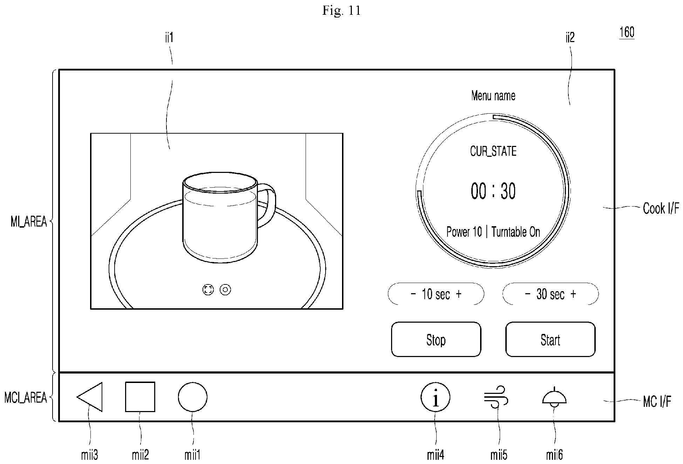

FIG. 11 is a diagram in which a cooking interface according to another embodiment of the present invention is displayed. FIG. 11 illustrates a state in which a user has put an object (e.g., the water cup) containing the material to be cooked into the cooking appliance 1000 and then has closed the digital controller door 100. This state is the same as in FIG. 10.

The user may increase or decrease the cooking time duration displayed on the ii2 on a 10 seconds or 30 seconds basis. Alternatively, the ii2 may correspond to an interface in which a time duration which has elapsed in the cooking process starting after the user sets the cooking time duration and then presses the "Start" button as in FIG. 10 is displayed as "00:30" and the user may add or subtract a time to or from a currently set cooking time duration.

A marking marked as CUR_STATE refers to a current state. When the user has set the time duration and then has selected the button "Start" in FIG. 10, the CUR_STATE may be displayed as "Cooking". When the user has selected the "Stop" button, the CUR_STATE may be displayed as "Paused" indicating that cooking is temporarily stopped (paused).

ii2 of FIG. 11 may correspond to one embodiment of a cooking process display interface. The remaining time duration as the cooking progresses may be displayed in the ii2. In addition, the ii1 of FIG. 10 shows a change in the input food or material while the cooking is performed, and thus may correspond to an embodiment of the cooking process display interface.

FIG. 10 or 11 shows a state in which the cooking interface is output on an entirety of the display 160 of the digital controller door 100. In FIGS. 10 and 11, on the left side (indicated by ii1), an image or a video captured by a camera mounted inside the cooking appliance is displayed.

In FIGS. 10 and 11, a right side (ii2. displays a menu or function or a cooking time duration as currently selected for the cooking, and displays an interface (Timer) for displaying the cooking time duration and increasing or decreasing the cooking time duration, and an interface for stopping in (STOP) or pausing (PAUSE) the cooking.

Each of FIGS. 10 and 11 shows a basic configuration of the cooking interface. While the cooking is in progress, an interface as shown in each of FIGS. 10 and 11 may be displayed on the screen. When the user presses the home button mii2 while the cooking is in progress (or when the user presses another key such as a back button/back key), the informational interface may be output, and the cooking interface may be changed to a pop-up interface.

FIG. 12 is a diagram showing an informational interface and a cooking interface according to an embodiment of the present invention.

When the user touches a specific button (e.g., mii2 or mii3) of the main control interface MC I/F while the cooking is performed in the state of FIG. 10 or 11, the informational interface including, for example, a background screen set by the user as shown in FIG. 12 is displayed on the display 160. In addition, the mini-controller interface may be displayed to indicate that the cooking in FIG. 10 or 11 is in progress.

FIG. 12 is a diagram illustrating a state in which an interface related to a cooking state has been changed to the pop-up interface, that is, the mini-controller interface, according to an embodiment of the present invention

FIG. 12 is a diagram showing the informational interface Inf I/F including, for example, a background screen when a user presses a back button/back key mii3 or a home button or a home key mii2 in a state in which cooking has been started in FIG. 10 or FIG. 11. In addition, the mini-controller interface as a pop-up interface indicating the current cooking state is displayed at a lower end of a lower right of the interface.

Compared with FIG. 11, the pop-up interface as one example of the mini-controller interface (indicated by MiniController) may display an image or a video obtained by capturing the inside of the cooking appliance, or an image indicating a state in which cooking is being performed.

In addition, an interface in which a time duration for which the cooking has been performed is displayed and which is used to stop or pause the cooking may be displayed, so that the user may stop or end the cooking. While the cooking is in progress, the mini-controller interface such as a pop-up interface may be executed, and an notification icon may be displayed on a status bar.

In the state of FIG. 12, when the user touches an area other than a specific button on the screen of the digital controller door, the cooking state interface as shown in FIG. 11 may be displayed again.

FIG. 12 is summarized as follows.

The informational interface is an interface that displays information not related to cooking of the cooking appliance. In one embodiment, the informational interface may include the background screen preset by the user or an information search screen. An embodiment of the information not related to cooking of the cooking appliance includes any one or more of an image or video set as a background, a TV image, a web search screen, or an executed screen of an application program installed in the application unit 170.

In addition, when the cooking is being performed in the cooking appliance 1000, the OS controller 200 may display the mini-controller interface in a first area of the display 160 on which the informational interface is displayed. For example, when the user performs a touch input on the cooking interface to start the cooking (" Start" button touch), the OS controller 200 may display that the cooking is started, and then output the informational interface and display the mini-controller interface.

The user may adjust the position of the mini-controller interface in a drag manner. When a drag input occurs after touching the mini-controller interface, the OS controller 200 may change a position of the mini-controller interface in response to the drag input. The OS controller 200 stores therein information about the position to which the mini-controller interface has moved in response to the drag input. Thereafter, the OS controller 200 may display the mini-controller interface with reference to the stored position information.

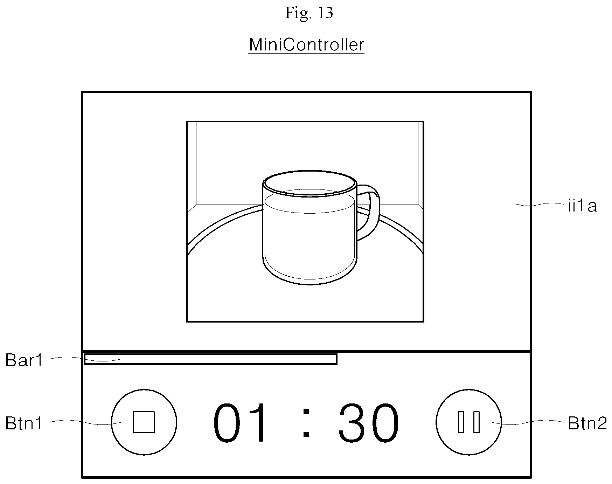

FIG. 13 is a diagram illustrating a configuration of a mini-controller interface according to an embodiment of the present invention. The mini-controller interface includes a display area (ii1a) in which an image or a video of an object containing a material to be cooked is displayed, a progress bar (indicated by Bar1) indicating a progress state of the cooking process, a stop button (indicated by Btn1) for ending the cooking, and a pause button (indicated by Btn2) for pausing the cooking.

A size of the mini-controller interface may increase or decrease under the control of the user. In response thereto, a size of each of the buttons, a size of the progress bar, and a size of the image or video obtained by photographing the object containing a material to be cooked may increase or decrease in proportion to the size of the mini-controller interface.

FIGS. 14 to 16 are views illustrating a human interface according to an embodiment of the present invention.

When the user presses a stop button in the pop-up interface (mini-controller interface) of FIG. 12, the cooking is canceled. Thus, the pop-up interface disappears as shown in FIG. 14. In addition, as shown in FIG. 14, a notification message "Cooking Stopped" or a toast message ToastMsg1 is displayed.

That is, when the cooking of the cooking appliance 1000 is finished or the cooking of the cooking appliance is paused or stopped in the mini-controller interface, the OS controller 200 may display the temporary interface (indicated by ToastMSG1) on a second area of the display on which the informational interface has been displayed.

The temporary interface may indicate one of the end of cooking, the pause of cooking, or the stop of cooking.

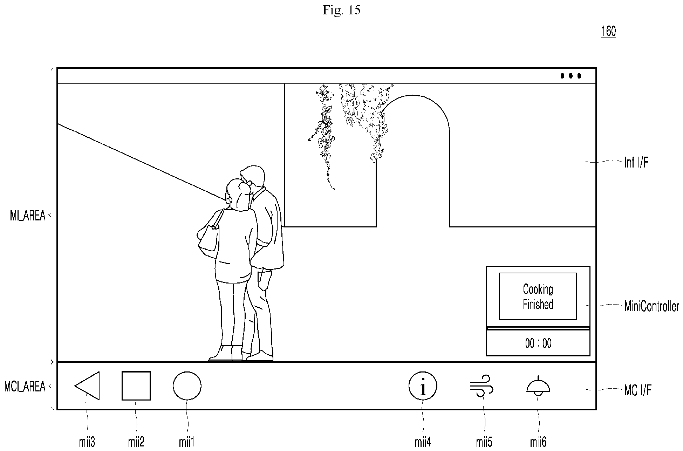

When the cooking has been completed in the pop-up of FIG. 12, the digital controller door displays a pop-up interface (mini-controller interface) and displays the cooking completion in the pop-up interface (mini-controller interface) as shown in FIG. 15. Since the cooking has been completed, the mini-controller interface of FIG. 15 does not have a separate operation button. The message "Cooking Finished" is displayed on the pop-up interface.

That is, as shown in FIG. 15, when a touch has been inputted to the stop button or the pause button of the mini-controller interface, or when the cooking process has been finished, the OS controller 200 may display the occurrence of the touch input or the end of the cooking process in the display area (e.g., iila of FIG. 13. of the mini-controller interface.

When, in the state of FIG. 14 or 15, the user opens the door, the screen is maintained as it is, and the mini-controller (pop-up interface) may disappear.

When, in the embodiment of FIG. 12 in which the cooking is in progress, the user opens the door, the cooking interface may be displayed instead of the informational interface as shown in FIG. 11.

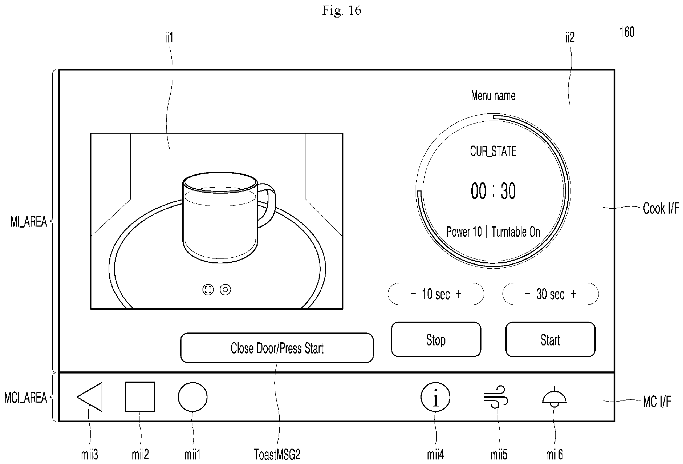

In addition to FIG. 11, since the door has been opened, a message (Close Door or/Press Start) for instructing to close the door or guiding to press the start button after closing the door may be provided as a toast message. In this regard, reference may be made to ToastMSG2 of FIG. 16.

FIG. 16 shows an interface displayed on the display 160 when a user opens the digital controller door during the cooking process. That is, FIG. 16 is a screen displayed by the digital controller door 100 when the door is opened during the cooking according to an embodiment of the present invention. If the door is open during the cooking process and thus the cooking is paused, the remaining cooking time duration is displayed and the Stop/Start button is displayed.

When the user selects the Start button without closing the door, a guide toast (such as "Close Door") to guide the user to close the door and start the cooking may be displayed at a location of the ToastMSG2. In addition, when the user has closed the door, a toast message to guide the user to press the Start button to resume the cooking may be displayed at the position of ToastMSG2.

ii1 is an image captured by the second camera 110b inside the digital controller door 100. In one embodiment, ii1 is an embodiment of an image obtained by photographing the inside of the cavity 1011 for a time duration immediately before the digital controller door 100 is opened. That is, the ii1 may display an image or a video obtained by capturing the inside of the cavity 1011, and thus the user may identify the object (e.g., a cup) containing the material to be cooked which the user has put into the cavity, using the image or video.

ii2 is an interface for setting a cooking time duration of the cooking appliance 1000, and shows one embodiment of the cooking control input interface showing the cooking time duration for which the cooking has been performed just before the digital controller door 100 is opened or the remaining cooking time duration, and allowing the user to adjust the cooking time duration. The user may increase or decrease the cooking time duration on a 10 seconds or 30 seconds basis. + and - is one embodiment of an interface allowing the user to increase or decrease the cooking time duration.

"Stop" and "Start" of ii2 are buttons via which the cooking appliance receives an instruction on whether to end or resume the cooking from the user.

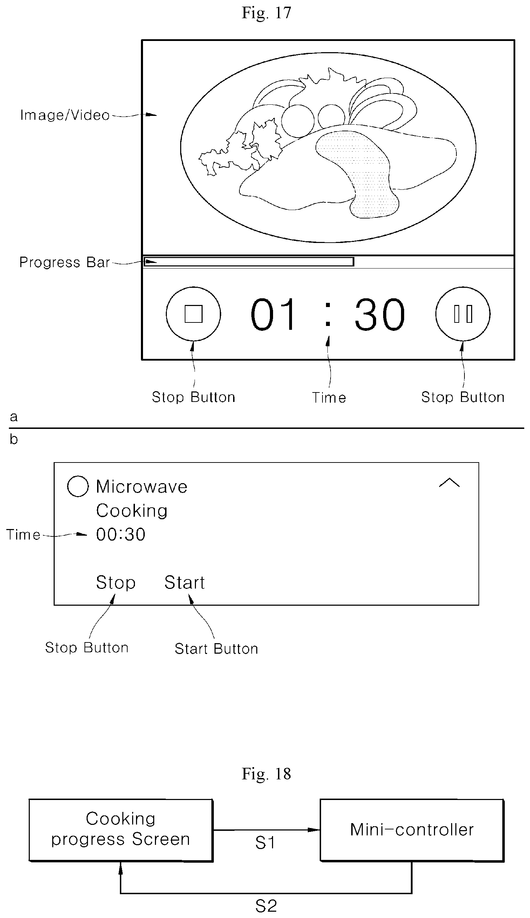

FIG. 17 is a diagram illustrating an implementation scheme of a pop-up interface, that is, a mini-controller interface, according to an embodiment of the present invention. The mini-controller may be configured in various ways, and more specifically, may include a configuration as shown in FIG. 17.
a of FIG. 17 shows an embodiment of the pop-up interface (mini-controller) of FIG. 12 described above.
b of FIG. 17 shows a pop-up interface (mini-controller) in a different manner as that in a of FIG. 17.

An area indicated by Time displays the remaining time duration of cooking. Stop/Pause buttons in the area are interfaces on which the user may touch to instruct the end of cooking and the pause of cooking, respectively. The progress bar indicates the remaining time duration of a total cooking time duration.

The user continuously presses the pop-up interface of FIG. 17 and then, in this state, moves the pop-up interface to a specific position on an entirety of the screen. That is, the user may move the pop-up interface in the drag and drop manner. Alternatively, the user touches the image/video area and then touches a specific point on the screen, such that the pop-up interface may move to the specific point.

The image/video area may show a state of the inside of the cavity in which the cooking is being performed. Alternatively, an icon indicating a state in which the cooking is being performed may be displayed in the area. In addition, a message indicating whether the cooking is stopped or the cooking has been completed in relation to the current state may be displayed in the image/video area.

When the user selects the Stop button, the cooking may be finished and then the pop-up interface may be provided. When the Pause button is selected, the cooking is paused. Then, the pause button may be changed to a restart or resume button. When the user touches an area other than the pop-up interface, the screen returns to a full screen.

In one example, the pop-up interface is always displayed during the cooking such that the cooking may be controlled and the cooking state may be checked. That is, the pop-up interface cannot be forcibly removed.

When the user opens the door in the state as shown in FIG. 15 after the cooking has been completed, the pop-up interface (mini-controller) may disappear. After the cooking has been completed, and when the home button is selected in FIG. 12, the screen is changed back to the screen shown in FIG. 11 such that the user may select additional cooking.

In one example, when the camera disposed inside the door takes an image of the inside of the cavity, the digital controller door may check whether a cooking target material (food) or an object (a bowl) containing the material has been input into the cavity. As a result, in response to that the cooking target material or the object containing the same is received/inputted into the cavity after the door is opened, a menu for allowing the user to select a cooking time duration or a cooking function may be displayed on the display 160. On the contrary, in response to that the cooking target material or the object containing the same is not received into the cavity after the door is opened, the digital controller door does not display a menu related to the cooking function on the screen.

FIG. 18 is a diagram illustrating a process in which a mini-controller is displayed or disappears according to an embodiment of the present invention.

In the cooking process (including a pause situation and a stop situation), an input such as a user touching the display screen occurs or the digital controller door 100 is closed. Alternatively, the user touches a specific button (e.g., a back button) of the main control interface (MC I/F) area. In response thereto, the OS controller 200 displays the mini-controller while removing the screen (screen as shown in FIG. 10 or 11) displayed on the digital controller door 100 in S1.

Even after the mini-controller has been displayed in the S1, the OS controller 200 may display a cooking progress screen as shown in FIG. 10 or 11 via a process of touching a button displayed on the mini-controller or touching a notification message displayed as an alarm. In another example, even when the user touches an area (background screen) other than the mini-controller area in the state in which the mini-controller is displayed, the screen may be returned to the cooking progress screen in S2. According to the interface processing process of the OS controller 200, when the user touches the main control interface (MC I/F) area, the operation S2 may not be performed.

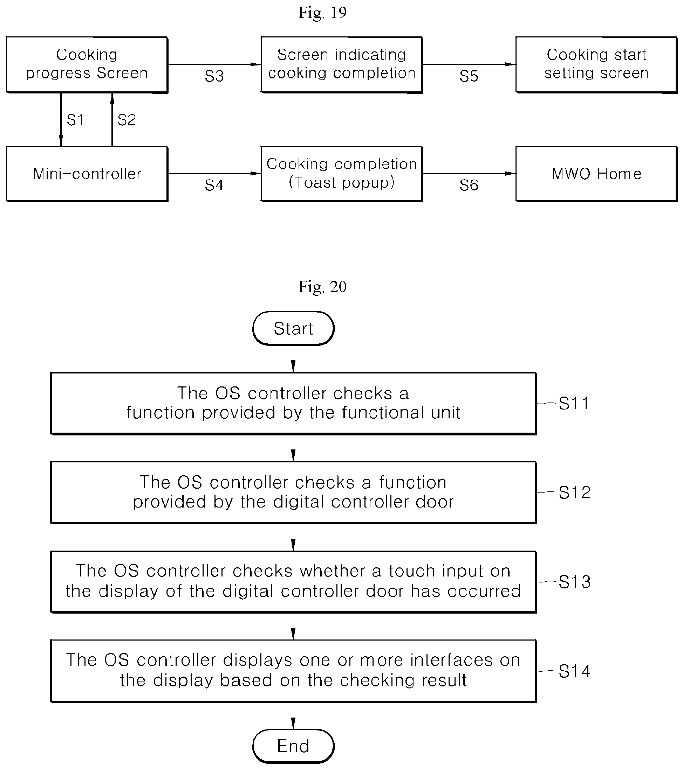

FIG. 19 is a diagram showing a flow of screen switching in a cooking completion process according to an embodiment of the present invention. S1 and S2 refer to the description of FIG. 18.

When cooking has been completed while the screen (e.g., FIG. 12, etc.) indicating the state in which the cooking is in progress is displayed in S3, the OS controller 200 displays a screen (e.g., FIG. 15) indicating the cooking completion on the display 160. Thereafter, when a predetermined time duration has elapsed, a setting screen (a cooking start setting screen, for example, FIG. 10 or FIG. 11) on which the user can start further cooking is displayed on the display 160 in S5.

In addition, when cooking has been completed in a state in which the mini-controller is displayed, a toast message (for example, MiniController of FIG. 15) may be displayed. Thereafter, the OS controller 200 may display a main screen (for example, a main screen displayed when a home button is pressed) on the display 160 in S6.

In summary, the OS controller 200 may display the cooking setting screen (a screen on which the start button has been pressed by the user before the cooking progress) before entering the cooking progress screen on the display 160 based on the cooking progress situation. Switching between the screens is performed in response to that a predetermined area is selected or a function is terminated.

FIG. 20 is a diagram illustrating a process in which an OS controller provides a human interface according to an embodiment of the present invention. The OS controller 200 may check an operation state of each of the components of the cooking appliance and determine an interface to be output to the display 160 based on the checking result.

In an embodiment, the OS controller 200 checks a function provided by the functional unit in S11. The OS controller 200 may check a functional state such as whether the functional unit 500 currently performs cooking, operates the ventilation fan 590, or controls the outside lamp 580. To this end, the OS controller 200 may receive information on the operation states of the components of the function unit 500 from the function controller 550. This is performed in the function controller control and monitoring as one of the functions of the OS controller 200.

In addition, the OS controller 200 checks a function provided by the digital controller door 100 in S12. This is achieved in the O_element monitoring as one of the functions of the OS controller 200. It may be checked whether the speaker/microphone 130 is operating or whether the application unit 170 outputs specific information.

The OS controller 200 checks whether a touch input on the display 160 of the digital controller door 100 has occurred in S13.

The OS controller 200 displays one or more interfaces among the detailed interfaces of the human interface as described in FIG. 8 on the display 160 based on the checking results of S11, S12, and S13 in S14. In this process, in displaying the main control interface on the display 160, the OS controller 200 may display an operation level of the ventilation fan 590 or whether to operate the outside lamp 580 as shown in mii5/mii6 of FIG. 9.

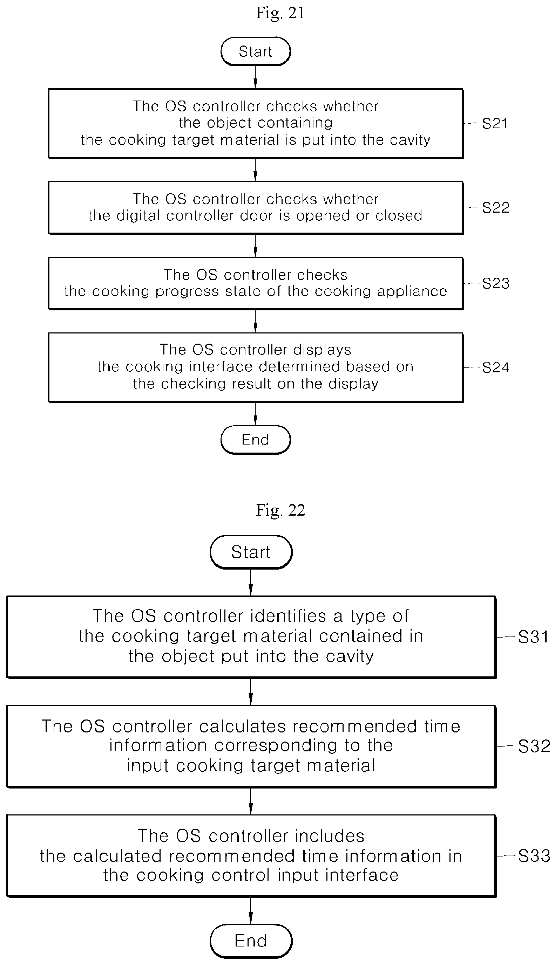

FIG. 21 is a diagram illustrating a process of displaying a cooking interface according to an embodiment of the present invention.

The OS controller 200 checks whether the object (for example, a bowl or a dish) containing the cooking target material is put into the cavity 1011 of the cooking appliance 1000 in S21. The OS controller 200 checks whether the digital controller door 100 is opened or closed in S22. The OS controller 200 checks the cooking progress state of the cooking appliance in S23. The cooking progress state refers to a state in which the cooking is paused during the cooking progress, or has been completed, or a state in which the cooking is in progress.

The OS controller 200 displays the cooking interface determined based on the checking result on the display 160 in S24.

The cooking interface may include any one or more of the cooking control input interface, the cooking process display interface, and the mini-controller interface as described above.

FIG. 22 is a diagram illustrating a process of presenting a cooking time duration suitable for an material to be cooked according to an embodiment of the present invention.

The OS controller 200 identifies a type of the cooking target material contained in the object (for example, a cup) put into the cavity 1011 in S31. The OS controller 200 calculates recommended time information corresponding to the input cooking target material in S32. For example, based on the type (e.g., liquid material) of the material contained in the cup received in the cavity or based on the size of the received object, the OS controller 200 may calculate recommended time information.

In addition, the OS controller 200 may calculate recommended time information based on a past history of a cooking time duration set by the user after a similar material to the currently detected material was previously received into the cavity or a past record in which the user set a new cooking time duration again after a previous cooking has been terminated.

In addition, the OS controller 200 may receive information related to the input material from the user through voice. For example, when the user speaks "meat thawing" by voice, the OS controller 200 may calculate recommended time information based on a cooking time duration required for the meat thawing.

Thereafter, the OS controller 200 includes the calculated recommended time information in the cooking control input interface in S33. For example, when the user opens the digital controller door 100, puts the cup in the cavity 1011, and then closes the digital controller door 100, the OS controller 200 may capture the inside of the cavity as shown in FIG. 11 and display a cooking time duration (e.g., 00:30 seconds) suitable for the capturing result in the cooking control input interface (ii2) area. The cooking starts when the user directly presses the "Start" button.

When the user adjusts the cooking time duration (e.g., on a seconds or 30 seconds basis), the OS controller 200 may store therein a mapping between the adjusted time information (e.g., a record of the user adding the 30 seconds after the time duration has been displayed as 30 seconds) and the input material type. The stored time information is applied to calculate a cooking time duration when the material of the same or similar type is put into the cavity later.

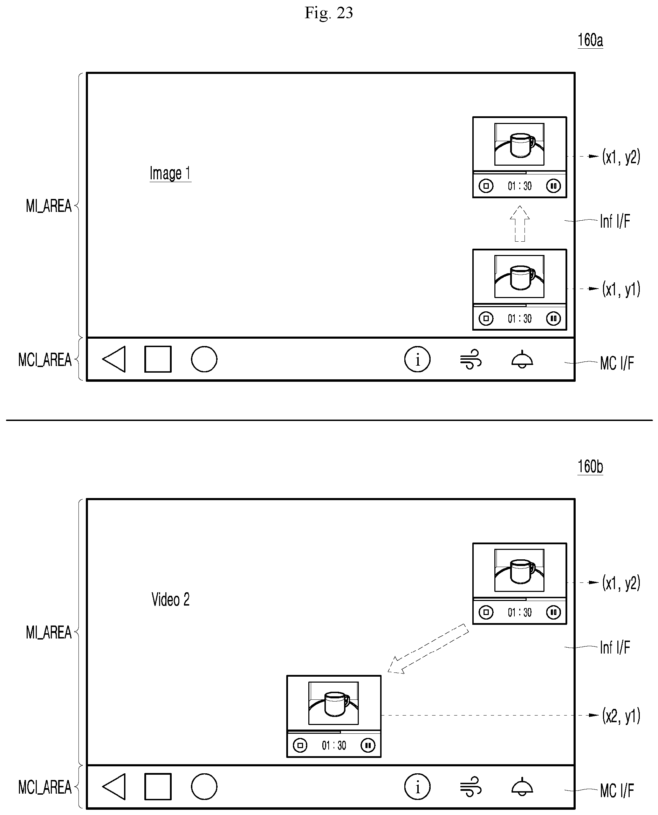

FIG. 23 is a diagram of storing and applying a location when a user moves the location of a mini-controller interface according to an embodiment of the present invention.

The informational interface may display various images or videos. For example, the OS controller 200 may set the background screen to be displayed in each specific time zone according to the user's control or based on preset information. Alternatively, the OS controller 200 may set an image or a video displayed on the informational interface according to a specific situation (season, anniversary, the type of cooking, etc.).

When the mini-controller interface is displayed on the informational interface on which the image or video is displayed, the mini-controller interface may be positioned to overlap the image or video of the informational interface, so that the image or video may not be visible to the user.

Accordingly, in order to cope with this situation, the position of the mini-controller interface displayed on the informational interface is moved. In this case, the OS controller 200 may store therein a mapping between the position of the mini-controller interface and the image/video displayed on the informational interface.

For example, 160a shows a process in which the user moves the mini-controller interface to a position (x1, y2) in a state in which the mini-controller interface is displayed at a position (x1, y1) on the informational interface in which "Image1" is displayed.

In this regard, the OS controller 200 stores therein a mapping (or correspondence) between the moved position information (x1, y2) of the mini-controller interface and the Image1.

Further, 160b shows a mini-controller interface at the position (x1, y2) on the informational interface "Video2" is displayed. In this regard, the positions (x1, y2) refer to the position to which the mini-controller interface had been previously moved in 160a.

In this regard, when the user has moved the mini-controller interface to the position (x2, y1), the OS controller 200 stores therein a mapping (or correspondence) between the moved position information (x2, y1) of the mini-controller interface and the Video2.

Thereafter, the OS controller 200 displays the mini-controller interface at the position (x1, y2) of the informational interface where the "Image1" is displayed. Similarly, the OS controller 200 displays the mini-controller interface at the position (x2, y1) of the informational interface where the "Video2" is displayed.

The position of the mini-controller interface may be updated according to the control of the user.

The above-described embodiment may also be applied to a case in which the informational interface displays a specific web page or a specific application.

In summary, when the movement of the mini-controller interface occurs, the OS controller 200 stores, in the internal memory, the mapping between the position of the mini-controller interface and identification information of an image, video, or application displayed on the informational interface. The OS controller 200 displays the mini-controller interface at the position stored in correspondence to (mapping with) the identification information on the informational interface in which the image, the video, or the application is displayed. As a result, when the user is viewing the contents displayed on the informational interface, the mini-controller interface may not interfere with the user viewing the contents.

When the above-described embodiment is implemented, various software or hardware of a door coupled to the cooking appliance may cooperate smoothly with a control component for controlling the cooking appliance, and a human interface for controlling the cooking appliance may be provided. In addition, the main control interface related to the interface-related control of the cooking appliance and the cooking interface for controlling the cooking state are provided, respectively or separately, so that the user may conveniently control the cooking appliance.

In particular, the OS controller may store therein the stored information related to a previous control history or information on the material that has been previously cooked and then may control the interface based on the stored information in using the cooking appliance later. Thus, the human interface may be provided based on the use pattern of the cooking appliance.

An embodiment of the present invention may be applied to home appliances. A home appliance according to an embodiment of the present invention includes a display for providing a human interface and an OS controller for controlling the same. In addition, the home appliance may include a functional unit. The function unit may provide a unique function provided by the home appliance.

The display may display an image or video and receive a touch input, and the display may be divided into a first area and a second area.

The OS controller may display at least one of (a) an interface required to control the operation of the home appliance or (b) an interface indicating the operation state of the home appliance on the first area of the display. In addition, the second area of the display may display an interface different from the interface output to the first area. A range or a position of each of the first and second areas may be changed.

The position of each of the first area and the second area may be changed in various ways, and the change of the position may be made via a user's touch or drag.

The interface displayed in the first area is displayed on the uppermost layer of the display and is in a state of being able to receive a touch input, and the OS controller removes or displays the interface displayed in the first area according to the touch input made to the display or the operation state of the home appliance.

The first area of the display may output one of a temporal interface, a cooking interface, and an informational interface, and the second area may display the main control interface under the control of the OS controller.

The functional unit may provide a cooking function, and one embodiment of the home appliance includes a cooking appliance including a digital controller door providing a human interface.

The digital controller door may include a display for displaying an image or video and receiving a touch input, and an operating system (OS) controller configured to control the same.

The display may be divided into two or more areas. In this regard, the display may be controlled such that the interfaces respectively displayed in the different areas may be different from each other. Thus, the home appliance may display an interface suitable for the operation of the home appliance. As a result, the user may accurately control the operation of the home appliance or check the operation state of the home appliance.

An embodiment of the present invention in which all the components are combined with each other or operate in combination with each other has been described. However, the present invention is not necessarily limited to this embodiment. Within the scope of the purpose of the present invention, at least two of all components may be selectively combined with other or may operate in the selectively combined manner with other. Furthermore, each of the components may be implemented as an independent hardware. However, some or all of the components may be selectively combined with each other and thus may be implemented using a computer program with a program module to perform some or all of the functions combined in one or more pieces of hardware. The codes and code segments that constitute the computer program may be easily deduced by a person skilled in the art from the present invention. The computer program may be stored in computer readable media and read and executed by a computer, thereby implementing the method of the present invention. The storage media for storing the computer program may include storage media including magnetic recording media, optical recording media, and semiconductor recording devices. Additionally, the computer program implementing an embodiment of the present invention includes a program module transmitted in real time duration through an external device.

Although the embodiments of the present invention have been described in more detail with reference to the accompanying drawings, the present invention is not necessarily limited to these embodiments, and may be modified in a various manner within the scope of the technical scope of the present invention. Accordingly, the embodiments as disclosed in the present invention are intended to describe rather than limit the technical idea of the present invention, and the scope of the technical idea of the present invention is not limited by these embodiments. Therefore, it should be understood that the embodiments described above are not restrictive but illustrative in all respects. In addition, even though an effect of a configuration of the present invention is not explicitly described in describing the embodiment of the present invention above, it is obvious that the predictable effect from the configuration should be recognized.

### -Explanation of reference numerals-

| | | | |
|---|---|---|---|
| 100: | digital controller door | 200: | OS controller |
| 500: | function unit | 550: | function controller |
| 1000: | cooking appliance | | |

## Claims

1. A cooking appliance (1000) comprising:
a functional unit (500) including a cavity for receiving food, and one or more functional components, the functional unit (500) being configured to provide a cooking function; and
the digital controller door (100) coupled to the functional unit (500), the digital controller door (100) including a display configured to display an image and receive a touch input; and
an operating system, OS, controller (200) configured to:
display a current screen in the display, the current screen including at least one of a cooking interface, an informational interface, a mini-controller interface and a temporal interface, and
in response to an occurrence of at least one of receiving the touch input on the display, a condition change of the functional unit (500) and a condition change of the digital controller door (100), transition the current screen of the display to an updated screen that includes changing the at least one of cooking interface, an informational interface, a mini-controller interface and a temporal interface.

2. The cooking appliance (1000) of claim 1, wherein the OS controller (200) is further configured to:
display a main control interface including a plurality of buttons or icons in a first area of the display, and display the current screen in a second area of the display.

3. The cooking appliance (1000) of claim 1 or 2,
wherein the OS controller (200) is configured to always display the main control interface on the display (160),
wherein the main control interface includes a home button, a back button, and a main stop button to which the touch input from a user is applied.

4. The cooking appliance of claims 1 to 3,
wherein the OS controller (200) is configured to display the cooking interface on the display in response to (a) an object comprising a cooking target material being put into the cooking appliance, (b) the digital controller door (100) being opened and closed, (c-i) the cooking of the cooking appliance being paused or completed, or (c-ii) the cooking being in progress,
wherein the cooking interface includes a cooking control input interface, a cooking process display interface, and a mini-controller interface.

5. The cooking appliance (1000) of claim 4,
wherein the informational interface displays information unrelated to cooking of the cooking appliance,
wherein in response to the cooking appliance performing a cooking function, the OS controller (200) is configured to display the mini-controller interface in a first area of the display where the informational interface has been displayed.

6. The cooking appliance of claim 4 or 5,
wherein in response to an occurrence of the movement of the mini-controller interface to a specific position, the OS controller (200) is configured to store therein a mapping between the specific position of the mini-controller interface and identification information of an image or a video or an application displayed on the information interface,
wherein the OS controller (200) is configured to display the mini-controller interface at the specific position on the information interface where the image or video or application is displayed, based on the stored mapping.

7. The cooking appliance of any one of claims 3 to 5,
wherein the mini-controller interface includes:
a display area where an image or a video obtained by capturing a cooking state of the cooking target material is displayed;
a progress bar for indicating a progress state of a cooking process;
a stop button for terminating the cooking; and
a pause button for temporarily stopping the cooking.

8. The cooking appliance of claim 7, wherein the OS controller (200) is further configured to:
when the stop button is of the mini-controller interface is selected, terminate the cooking function being currently executing and provide the temporal interface for notifying that cooking has stopped.

9. The cooking appliance of any one of claims 1 to 7, wherein the OS controller (200) is further configured to:
in response to an occurrence of the touch input in an area other than the mini-controller, display full screen for cooking interface or informational interface.

10. The cooking appliance of any one of claims 1 to 7, wherein the OS controller (200) is further configured to:
in response to the door opening, terminate the cooking function being currently executing if cooking is in progress, remove the mini-controller and maintain other interfaces as same or change the informationa interface to the cooking interface when the information interface is being displayed.

11. A method for providing an interface on a cooking appliance,
wherein the cooling appliance includes:
a functional unit (500) configured to provide a cooking function; and
the digital controller door (100) configured to provide a human interface,
wherein the method comprises:
displaying, by the OS controller (200), a current screen in the display, the current screen including at least one of a cooking interface, an informational interface, a mini-controller interface and a temporal interface; and
in response to an occurrence of at least one of receiving a touch input on the display, a condition change of the functional unit (500) and a condition change of the digital controller door (100), transitioning, by the OS controller (200), the current screen of the display to an updated screen that includes changing the at least one of cooking interface, an informational interface, a mini-controller interface and a temporal interface.

12. The method for providing the interface of of claim, 11 the method comprising:
displaying a main control interface including a plurality of buttons or icons in a first area of the display; and
displaying the current screen in a second area of the display.

13. The method for providing the interface of claim 11 or 12,
wherein the displaying, by the OS controller (200) of the at least one interface includes:
in response to (a) an object comprising a cooking target material being put into the cooking appliance (1000), (b) the digital controller door (100) being opened and closed, (c-i) the cooking of the cooking appliance being paused or completed, or (c-ii) the cooking being in progress, displaying, by the OS controller (200), the cooking interface on the display (160),
wherein the cooking interface includes a cooking control input interface, a cooking process display interface, and a mini-controller interface.

14. The method for providing the interface of claim 13,
wherein the informational interface displays information unrelated to cooking of the cooking appliance,
wherein the method further comprises, in response to the cooking appliance (1000) performing a cooking function, displaying, by the OS controller (200), the mini-controller interface in a first area of the display where the informational interface has been displayed.

15. The method for providing the interface of claim 13 or 14,
wherein the method further comprises:
in response to an occurrence of the movement of the mini-controller interface to a specific position, storing, by the OS controller (200), therein a mapping between the specific position of the mini-controller interface and identification information of an image or a video or an application displayed on the information interface; and
displaying, by the OS controller (200), the mini-controller interface at the specific position on the information interface where the image or the video or the application is displayed, based on the stored mapping.
